# EUROPEAN PATENT SPECIFICATION

(11) **EP 4 451 769 B1**
(45) Date of publication and mention of the grant of the patent: **21.10.2026**
(21) Application number: 22907968.6
(22) Date of filing: 15.12.2022
(51) Int. Cl.: H04W 4/40, H04W 76/14, H04W 76/28, H04W 72/25, H04W 92/18, H04W 72/20

(54) **METHOD AND DEVICE FOR DELIVERING RESOURCE INFORMATION IN CONSIDERATION OF DRX ACTIVE TIME BY MEANS OF IUC MAC CE IN NR V2X**
VERFAHREN UND VORRICHTUNG ZUR BEREITSTELLUNG VON RESSOURCENINFORMATIONEN UNTER BERÜCKSICHTIGUNG DER DRX-AKTIVZEIT MITTELS IUC-MAC-CE IN NR V2X
PROCÉDÉ ET DISPOSITIF DE DISTRIBUTION D'INFORMATIONS DE RESSOURCES TENANT COMPTE D'UN TEMPS ACTIF DRX AU MOYEN D'IUC MAC CE DANS UNE NR V2X

(30) Priority: 17.12.2021 KR 20210181998; 04.01.2022 KR 20220000698
(43) Date of publication of application: 23.10.2024
(73) Proprietor: LG Electronics Inc., Yeongdeungpo-gu Seoul 07336 (KR)
(72) Inventor: PARK, Giwon, Seoul 06772 (KR); BACK, Seoyoung, Seoul 06772 (KR)
(74) Representative: Frenkel, Matthias Alexander
(86) International application number: PCT/KR2022/020464
(87) International publication number: WO 2023/113501

(56) References cited:
- WO-A1-2021/136379
- KR-A- 20210 053 208
- ERICSSON: "Details on mode 2 enhancements for inter-UE coordination", vol. RAN WG1, no. e-Meeting; 20211111 - 20211119, 5 November 2021 (2021-11-05), XP052074424, Retrieved from the Internet <URL:https://ftp.3gpp.org/tsg_ran/WG1_RL1/TSGR1_107-e/Docs/R1-2112352.zip R1-2112352 Ericsson - Details on mode 2 enhancements for inter-UE coordination.docx> [retrieved on 20211105]
- VIVO: "Remaining issues for sidelink DRX", vol. RAN WG2, no. electronic; 20211101 - 20211112, 22 October 2021 (2021-10-22), XP052067095, Retrieved from the Internet <URL:https://ftp.3gpp.org/tsg_ran/WG2_RL2/TSGR2_116-e/Docs/R2-2110650.zip R2-2110650_Remaining issues for sidelink DRX.docx> [retrieved on 20211022]
- VIVO: "Left issues on SL DRX", vol. RAN WG2, no. electronic; 20210519 - 20210527, 11 May 2021 (2021-05-11), XP052006987, Retrieved from the Internet <URL:https://ftp.3gpp.org/tsg_ran/WG2_RL2/TSGR2_114-e/Docs/R2-2105352.zip R2-2105352_Left issues on SL DRX.docx> [retrieved on 20210511]
- INTERDIGITAL: "Summary of [POST113-e][703][V2X/SL] Details of Timer (InterDigital)", 3GPP TSG-RAN WG2 #113-BIS-E, R2-2102801, 9 April 2021 (2021-04-09), XP052178602
- LG ELECTRONICS INC.: "Discussion on other MAC aspects", 3GPP TSG-RAN WG2 #115-E, R2-2108608, 6 August 2021 (2021-08-06), XP052034947
- OPPO: "Discussion on DRX left issues", 3GPP TSG-RAN WG2 #116-E, R2-2109415, 22 October 2021 (2021-10-22), XP052065902

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication apparatuses require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication. The document ("Details on mode 2 enhancements for inter-UE coordination", 3GPP DRAFT, R1-2112352) outlines a set of preferred/non-preferred resources, resource collision indication, and a procedure for UEs performing power saving mechanism, e.g., random resource selection. The document ("Remaining issues for sidelink DRX", 3GPP DRAFT, R2-2110650) outlines PC5 DRX configurations for groupcast/broadcast and unicast, SL DRX command MAC CE, and SL DRX configuration for the unicast, SL DRX alignment between two directions, and SI-PUCCH-Config. The document ("Left issues on SL DRX", 3GPP DRAFT, R2-2105352) outlines DRX duration calculation, a SL DRX timer, and TX UE behaviors.

### DISCLOSURE

### TECHNICAL SOLUTION

According to an embodiment of the present disclosure, a method for performing, by a first device, wireless communication may be proposed. For example, the method may comprise: triggering a transmission of an inter user equipment, UE, coordination, IUC, medium access control, MAC, control element, CE, including IUC information; generating a MAC protocol data unit, PDU, including the IUC MAC CE, based on logical channel prioritization, LCP; transmitting, to a second device, first sidelink control information, SCI, for scheduling of a physical sidelink shared channel, PSSCH, through a physical sidelink control channel, PSCCH; and transmitting, to the second device, the MAC PDU and second SCI through the PSSCH, wherein a destination layer, L, 2 ID related to a transmission of IUC information, which is obtained based on the MAC PDU and the second SCI, may be an identifier for identifying a transmission of IUC information.

According to an embodiment of the present disclosure, a first device for performing wireless communication may be proposed. For example, the first device may comprise: at least one transceiver; at least one processor; and at least one memory operably connectable to the at least one processor and storing instructions. For example, the instructions, based on being executed by the at least one processor, may cause the first device to perform operations, wherein the operations comprise: triggering a transmission of an inter user equipment, UE, coordination, IUC, medium access control, MAC, control element, CE, including IUC information; generating a MAC protocol data unit, PDU, including the IUC MAC CE, based on logical channel prioritization, LCP; transmitting, to a second device, first sidelink control information, SCI, for scheduling of a physical sidelink shared channel, PSSCH, through a physical sidelink control channel, PSCCH; and transmitting, to the second device, the MAC PDU and second SCI through the PSSCH, wherein a destination layer, L, 2 ID related to a transmission of IUC information, which is obtained based on the MAC PDU and the second SCI, may be an identifier for identifying a transmission of IUC information. The invention is defined by the appended claims. Any embodiment, aspect, example or implementation not being part of the claims, is only presented as information.

### ADVANTAGEOUS EFFECTS

A UE can efficiently perform sidelink communication.

### BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.
FIG. 7 shows three cast types, based on an embodiment of the present disclosure.
FIG. 8 shows a procedure for an IUC receiving UE to identify a transmission of IUC information, according to one embodiment of the present disclosure.
FIG. 9 shows an embodiment in which an IUC transmitting UE generates a MAC PDU based on a destination ID for transmission of IUC information, according to one embodiment of the present disclosure.
FIG. 10 shows a procedure for a first device to perform wireless communication, according to one embodiment of the present disclosure.
FIG. 11 shows a procedure for a second device to perform wireless communication, according to one embodiment of the present disclosure.
FIG. 12 shows a communication system 1, based on an embodiment of the present disclosure.
FIG. 13 shows wireless devices, based on an embodiment of the present disclosure.
FIG. 14 shows a signal process circuit for a transmission signal, based on an embodiment of the present disclosure.
FIG. 15 shows another example of a wireless device, based on an embodiment of the present disclosure.
FIG. 16 shows a hand-held device, based on an embodiment of the present disclosure.
FIG. 17 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

For terms and techniques used herein that are not specifically described, reference may be made to wireless communication standards documents published prior to the filing of this specification.

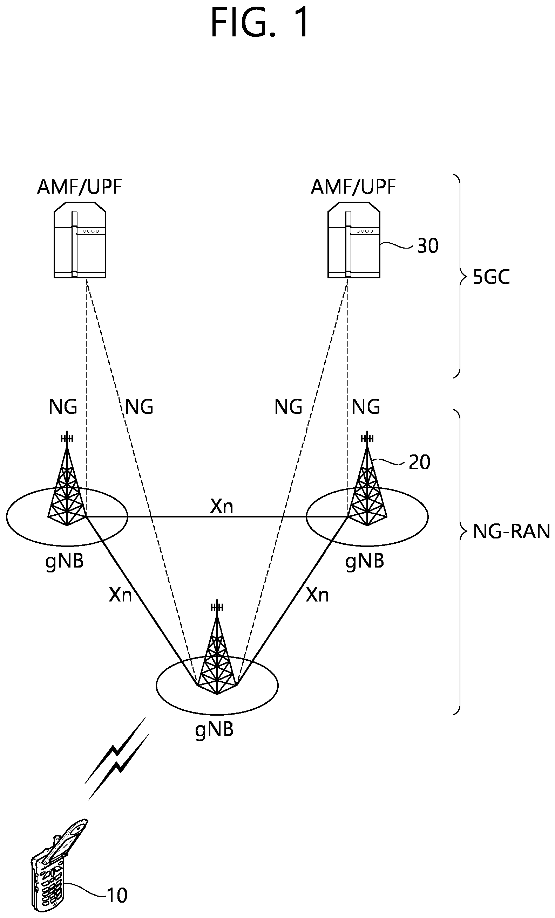

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

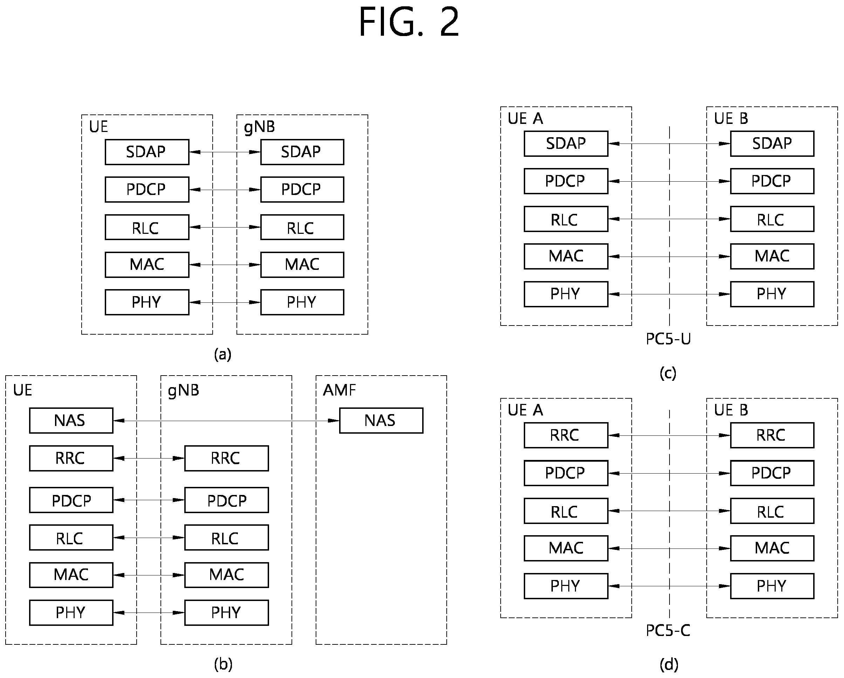

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication. (c) of FIG. 2 shows a radio protocol stack of a user plane for SL communication, and (d) of FIG. 2 shows a radio protocol stack of a control plane for SL communication.

Referring to FIG. 2, a physical layer provides an higher layer with an information transfer service through a physical channel. The physical layer is connected to a medium access control (MAC) layer which is an higher layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a specific service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

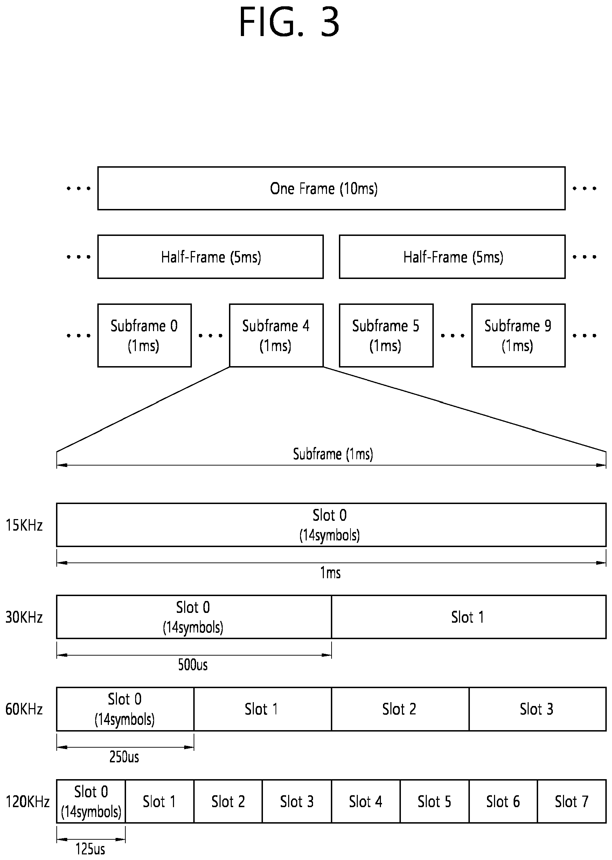

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

Table 2 shows an example of a number of symbols per slot, a number of slots per frame, and a number of slots per subframe based on the SCS, in a case where an extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

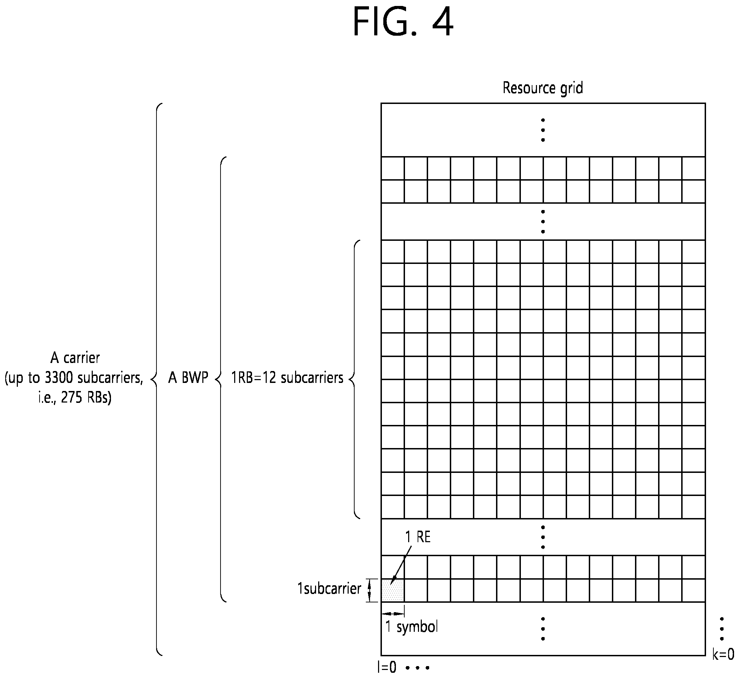

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier
For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

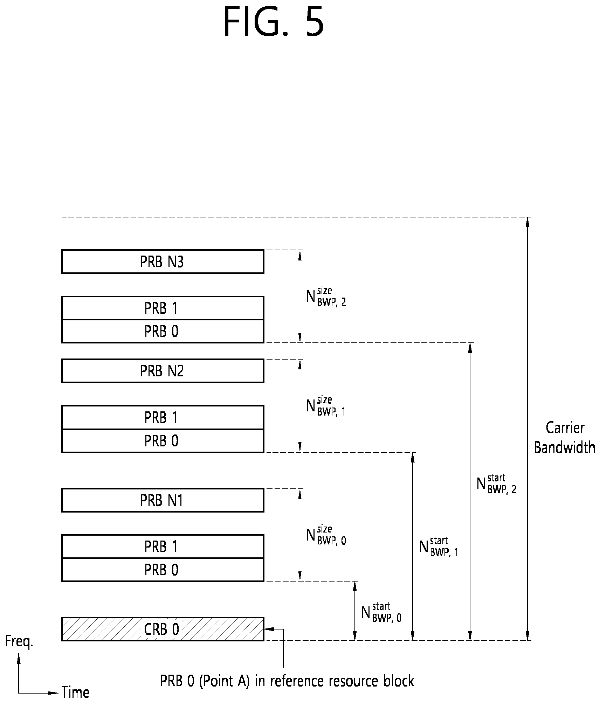

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N ^{start}_{BWP} from the point A, and a bandwidth N^{size} _{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

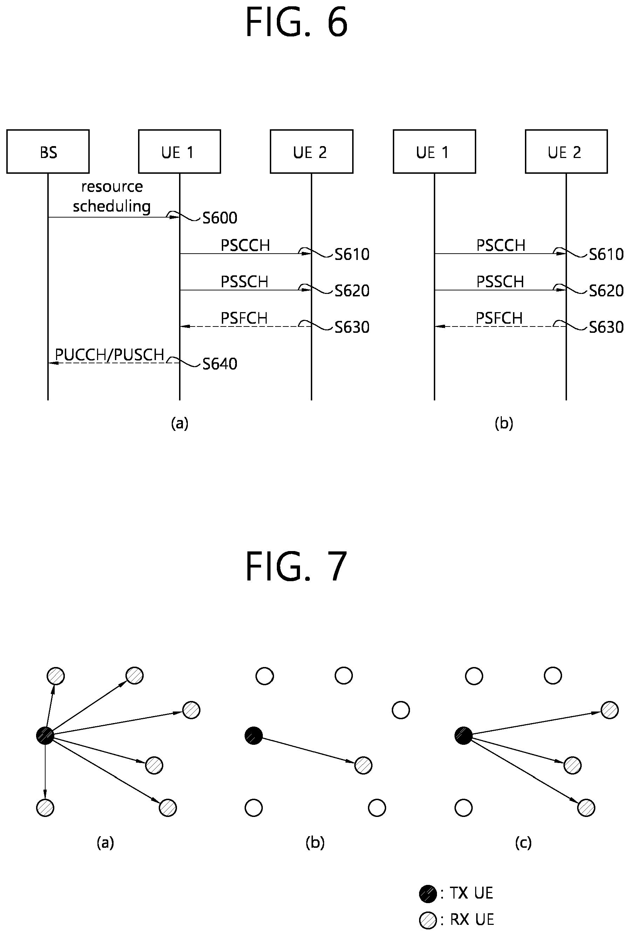

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1^{st}-stage SCI) to a second UE based on the resource scheduling. In step S620, the first UE may transmit a PSSCH (e.g., 2^{nd}-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1^{st}-stage SCI) to a second UE by using the resource(s). In step S620, the first UE may transmit a PSSCH (e.g., 2^{nd}-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format. For example, the 1^{st}-stage SCI format may include a SCI format 1-A, and the 2^{nd}-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
   - 2^{nd}-stage SCI format - 2 bits as defined in Table 5
   - Beta_offset indicator - 2 bits as provided by higher layer parameter sl-BetaOffsets2ndSCI
   - Number of DMRS port - 1 bit as defined in Table 6
   - Modulation and coding scheme - 5 bits
   - Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
   - PSFCH overhead indication - 1 bit if higher layer parameter sl-PSFCH-Period = 2 or 4; 0 bit otherwise
   - Reserved - a number of bits as determined by higher layer parameter sl-NumReservedBits, with value set to zero.

**[Table 5]**

| Value of 2^{nd}-stage SCI format field | 2^{nd}-stage SCI format |
|---|---|
| 00 | SCI format 2-A |
| 01 | SCI format 2-B |
| 10 | Reserved |
| 11 | Reserved |

**[Table 6]**

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

**[Table 7]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource.

Referring to (a) of FIG. 6, in step S640, the first UE may transmit SL HARQ feedback to the base station through the PUCCH and/or the PUSCH.

Hereinafter, a UE procedure for determining a subset of resources to be reported to an higher layer in PSSCH resource selection in sidelink resource allocation mode 2 will be described.

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:
- the resource pool from which the resources are to be reported;
- L1 priority, *prio_{TX}*;
- the remaining packet delay budget;
- the number of sub-channels to be used for the PSSCH/PSCCH transmission in a slot, *L*_{subCH};
- optionally, the resource reservation interval, P_{rsvp_TX}, in units of msec.
- if the higher layer requests the UE to determine a subset of resources from which the higher layer will select resources for PSSCH/PSCCH transmission as part of re-evaluation or pre-emption procedure, the higher layer provides a set of resources (*r*₀, *r*₁, *r*₂, ...) which may be subject to re-evaluation and a set of resources $\left({r}_{0}^{′},{r}_{1}^{′},{r}_{2}^{′},…\right)$ which may be subject to pre-emption.
- it is up to UE implementation to determine the subset of resources as requested by higher layers before or after the slot ${r}_{i}^{"} - {T}_{3}$, where ${r}_{i}^{"}$ is the slot with the smallest slot index among (*r*₀, *r*₁, *r*₂, ...) and $\left({r}_{0}^{′},{r}_{1}^{′},{r}_{2}^{′},…\right)$, and *T*₃ is equal to ${T}_{proc , 1}^{SL}$, where ${T}_{proc , 1}^{SL}$ is defined in slots, and where *µ_{SL}* is the SCS configuration of the SL BWP.

The following higher layer parameters affect this procedure:

sl-SelectionWindowList: internal parameter *T*_{2*min*} is set to the corresponding value from higher layer parameter sl-SelectionWindowList for the given value of *prio_{TX}.*
- sl-Thres-RSRP-List: this higher layer parameter provides an RSRP threshold for each combination (*pᵢ, pⱼ*), where *pᵢ* is the value of the priority field in a received SCI format 1-A and *p*ⱼ is the priority of the transmission of the UE selecting resources; for a given invocation of this procedure, *p*ⱼ *= prio_{TX}.*
- sl-RS-ForSensing selects if the UE uses the PSSCH-RSRP or PSCCH-RSRP measurement.
- sl-ResourceReservePeriodList
- sl-SensingWindow: internal parameter *T*₀ is defined as the number of slots corresponding to sl-SensingWindow msec.
- sl-TxPercentageList: internal parameter *X* for a given *prio_{TX}* is defined as sl-TxPercentageList (*prio_{TX}*) converted from percentage to ratio.
- sl-PreemptionEnable: if sl-PreemptionEnable is provided, and if it is not equal to 'enabled', internal parameter *prioₚᵣₑ* is set to the higher layer provided parameter sl-PreemptionEnable.

The resource reservation interval, *P*_{rsvp_TX}, if provided, is converted from units of msec to units of logical slots, resulting in ${P}_{rsvp_TX}^{′}$.

### Notation:

$\left(t{′}_{0}^{SL},t{′}_{1}^{SL},t{′}_{2}^{SL},…\right)$ may denote the set of slots which belongs to the sidelink resource pool.

For example, a UE may select a set of candidate resources (Sa) based on Table 8. For example, when resource (re)selection is triggered, a UE may select a candidate resource set (Sa) based on Table 8. For example, when re-evaluation or pre-emption is triggered, a UE may select a candidate resource set (Sa) based on Table 8.

**[Table 8]**

| |
|---|
| The following steps are used: |
| 1) A candidate single-slot resource for transmission *R*_{x,y} is defined as a set of *L*_{subCH} contiguous sub-channels with sub-channel *x+j* in slot $t {′}_{y}^{SL}$ where *j* = 0,..., *L*_{subCH} - 1. The UE shall assume that any set of *L*_{subCH} contiguous sub-channels included in the corresponding resource pool within the time interval [*n* + *T₁, n* + *T*₂] correspond to one candidate single-slot resource, where |
| - selection of *T*₁ is up to UE implementation under $0 \leq {T}_{1} \leq {T}_{proc , 1}^{SL}$, where ${T}_{proc , 1}^{SL}$ is defined in slots in Table 8.1.4-2 where *µ_{SL}* is the SCS configuration of the SL BWP; |
| - if *T*_{2*min*} is shorter than the remaining packet delay budget (in slots) then *T*₂ is up to UE implementation subject to *T*_{2*min*} ≤ *T*₂ ≤ remaining packet delay budget (in slots); otherwise *T*₂ is set to the remaining packet delay budget (in slots). |
| The total number of candidate single-slot resources is denoted by *M*ₜₒₜₐₗ. |
| 2) The sensing window is defined by the range of slots $\left[n-{T}_{0},n-{T}_{proc , 0}^{SL}\right)$ where *T*₀ is defined above and ${T}_{proc , 0}^{SL}$ is defined in slots in Table 8.1.4-1 where *µ*_{*S*L} is the SCS configuration of the SL BWP. The UE shall monitor slots which belongs |
| to a sidelink resource pool within the sensing window except for those in which its own transmissions occur. The UE shall perform the behaviour in the following steps based on PSCCH decoded and RSRP measured in these slots. |
| 3) The internal parameter *Th*(*pᵢ,pⱼ*) is set to the corresponding value of RSRP threshold indicated by the *i*-th field in *slThres-RSRP-List,* where *i = pᵢ* + (*pⱼ* - 1) * 8. |
| 4) The set *S_{A}* is initialized to the set of all the candidate single-slot resources. |
| 5) The UE shall exclude any candidate single-slot resource *R*_{x,y} from the set *S_{A}* |
| if it meets all the following conditions: |
| - the UE has not monitored slot $t {′}_{m}^{SL}$ in Step 2. |
| - for any periodicity value allowed by the higher layer parameter *sl-ResourceReservePeriodList* and a hypothetical SCI format 1-A received in slot $t {′}_{m}^{SL}$ with *'Resource reservation period* field set to that periodicity value and indicating all subchannels of the resource pool in this slot, condition c in step 6 would be met. |
| 5a) If the number of candidate single-slot resources R_{x,y} remaining in the set *S_{A}* is smaller than *X · Mₜₒₜₐₗ,* the set *S_{A}* is initialized to the set of all the candidate single-slot resources as in step 4. |
| 6) The UE shall exclude any candidate single-slot resource *R*_{x,y} from the set *S_{A}* |
| if it meets all the following conditions: |
| a) the UE receives an SCI format 1-A in slot $t {′}_{m}^{SL}$, and *'Resource reservation period'*field, if present, and *'Priority'* field in the received SCI format 1-A indicate the values *P*_{rsvp_RX} and *prio_{RX},* respectively according to Clause 16.4 in [6, TS 38.213]; |
| b) the RSRP measurement performed, according to clause 8.4.2.1 for the received SCI format 1-A, is higher than *Th*(*prio_{RX}, prio_{TX}*); |
| c) the SCI format received in slot $t {′}_{m}^{SL}$ or the same SCI format which, if and only if the *'Resource reservation period* field is present in the received SCI format 1-A, is assumed to be received in slot(s) ${t}_{m + q \times {P}_{rsvp _ RX}^{′}}^{′ SL}$ determines according to clause 8.1.5 the set of resource blocks and slots which overlaps with ${R}_{x , y + j \times {P}_{rsvp _ TX}^{′}}$ for *q*=1, 2, ..., *Q* and *j*=0, *1, ..., Cᵣₑₛₑₗ* - 1. Here, ${P}_{rsvp _ RX}^{′}$ is *P*_{rsvp_RX} converted to units of logical slots according to clause 8.1.7, $Q = \left⌈\frac{{T}_{scal}}{{P}_{rsvp _ RX}}\right⌉$ if *P_{rsvp_RX} < T_{scal}* and $n ′ - m \leq {P}_{rsvp _ RX}^{′}$ *,* where $t {′}_{n ′}^{SL} = n$ if slot n belongs to the set $\left(t{′}_{0}^{SL},t{′}_{1}^{SL},…,t{′}_{T {′}_{max} - 1}^{SL}\right)$ *,* otherwise slot $t {′}_{n ′}^{SL}$ is the first slot after slot n belonging to the set $\left(t{′}_{0}^{SL},t{′}_{1}^{SL},…,t{′}_{T {′}_{max} - 1}^{SL}\right)$; otherwise *Q* = 1. *T_{scal}* is set to selection window size *T*₂ converted to units of msec. |
| 7) If the number of candidate single-slot resources remaining in the set *S_{A}* is smaller than *X · Mₜₒₜₐₗ,* then *Th(pᵢ*, *pⱼ*) is increased by 3 dB for each priority value *Th*(*pᵢ*, *pⱼ*) and the procedure continues with step 4. |
| The UE shall report set *S_{A}* to higher layers. |
| If a resource *rᵢ* from the set (*r*₀, *r*₁, *r*₂, ...) is not a member of *S_{A},* then the UE shall report re-evaluation of the resource *rᵢ* to higher layers. |
| If a resource ${r}_{i}^{′}$ from the set $\left({r}_{0}^{′},{r}_{1}^{′},{r}_{2}^{′},…\right)$ meets the conditions below then the UE shall report pre-emption of the resource ${r}_{i}^{′}$ to higher layers |
| - ${r}_{i}^{′}$ is not a member of *S_{A},* and |
| - ${r}_{i}^{′}$ meets the conditions for exclusion in step 6, with *Th*(*prio_{RX}*, *prio_{TX}*) set to the final threshold after executing steps 1)-7), i.e. including all necessary increments for reaching *X* · *M*ₜₒₜₐₗ, and |
| - the associated priority *prio_{RX},* satisfies one of the following conditions: |
| *- sl-PreemptionEnable* is provided and is equal to 'enabled' and *prio_{TX} > prio_{RX}* |
| *- sl-PreemptionEnable* is provided and is not equal to 'enabled', and *prio_{RX} < prioₚᵣₑ* and *prio_{TX} > prio_{RX}* |

Meanwhile, partial sensing may be supported for power saving of the UE. For example, in LTE SL or LTE V2X, the UE may perform partial sensing based on Tables 4 and 5.

**[Table 9]**

| | | |
|---|---|---|
| In sidelink transmission mode 4, when requested by higher layers in subframe *n* for a carrier, the UE shall determine the set of resources to be reported to higher layers for PSSCH transmission according to the steps described in this Subclause. Parameters *L*_{subCH} the number of sub-channels to be used for the PSSCH transmission in a subframe, *P*_{rsvp_TX} the resource reservation interval, and *prio_{TX}* the priority to be transmitted in the associated SCI format 1 by the UE are all provided by higher layers. | | |
| In sidelink transmission mode 3, when requested by higher layers in subframe *n* for a carrier, the UE shall determine the set of resources to be reported to higher layers in sensing measurement according to the steps described in this Subclause. Parameters *L*_{subCH}, *P*_{rsvp_TX} and *prio_{TX}* are all provided by higher layers. *Cᵣₑₛₑₗ* **is** determined by *C*ᵣₑₛₑₗ=10*SL_RESOURCE_RESELECTION_COUNTER, where SL_RESOURCE_RESELECTION_COUNTER is provided by higher layers. | | |
| ... | | |
| If partial sensing is configured by higher layers then the following steps are used: | | |
| | | 1) A candidate single-subframe resource for PSSCH transmission *R*_{x,y} is defined as a set of *L*_{subCH} contiguous sub-channels with sub-channel *x+j* in |
| | subframe ${t}_{y}^{SL}$ where *j* = 0, ... , *L_{subCH}* - 1. The UE shall determine by its implementation a set of subframes which consists of at least Y subframes within the time interval [*n* + *T*₁, *n* + *T*₂] where selections of *T*₁ and *T*₂ are up to UE implementations under *T*₁ ≤ 4 and *T*_{2*min*}(*prio_{TX}*) ≤ *T*₂ ≤ 100, if *T₂ₘᵢₙ*(*prio_{TX}*) is provided by higher layers for *prio_{TX},* otherwise 20 ≤ *T*₂ ≤ 100. UE selection of *T*₂ shall fulfil the latency requirement and Y shall be greater than or equal to the high layer parameter *minNumCandidateSF.* The UE shall assume that any set of *L*_{subCH} contiguous sub-channels included in the corresponding PSSCH resource pool within the determined set of subframes correspond to one candidate single-subframe resource. The total number of the candidate single-subframe resources is denoted by *M*ₜₒₜₐₗ. | |
| | 2) If a subframe ${t}_{y}^{SL}$ is included in the set of subframes in Step 1, the UE shall monitor any subframe ${t}_{y - k \times {P}_{step}}^{SL}$ if k-th bit of the high layer parameter *gapCandidateSensing* is set to 1. The UE shall perform the behaviour in the following steps based on PSCCH decoded and S-RSSI measured in these subframes. | |
| | 3) The parameter *Th*_{a,b} is set to the value indicated by the i-th *SL-ThresPSSCH-RSRPfield* in *SL-ThresPSSCH-RSRP-List* where i = (a - 1) * 8 + *b.* | |
| | 4) The set *S_{A}* is initialized to the union of all the candidate single-subframe resources. The set *S_{B}* is initialized to an empty set. | |
| | 5) The UE shall exclude any candidate single-subframe resource*R*_{x,y} from the set *S_{A}* if it meets all the following conditions: | |
| | | - the UE receives an SCI format 1 in subframe ${t}_{m}^{SL}$, and "Resource reservation" field and "Priority" field in the received SCI format 1 indicate the values *P_{rsvp_RX}* and *prio_{RX},* respectively. |
| | | - PSSCH-RSRP measurement according to the received SCI format 1 is higher than *Th_{prioTX}, prio_{RX}.* |
| ${t}_{y ′}^{SL}$ | | - the SCI format received in subframe ${t}_{m}^{SL}$ or the same SCI format 1 which is assumed to be received in subframe(s) ${t}_{m + q \times {P}_{step} \times {P}_{{rsvp}_{RX}}}^{SL}$ determines according to 14.1.1.4C the set of resource blocks and subframes which overlaps with *R_{x,y+jxP'ᵣₛᵥₚ_TX}* for (*q*=1, 2, ..., *Q* and *j*=0*,* 1, ..., *C*ᵣₑₛₑₗ - 1. Here, $Q = \frac{1}{{P}_{rsvp _ RX}}$ if P_{rsvp_RX} and *y*' - m ≤ *Pₛₜₑₚ* × *P_{rsvp_RX}* + *Pₛₜₑₚ,* where is the last subframe of the *Y* subframes , and *Q* = 1 otherwise. |
| | 6) If the number of candidate single-subframe resources remaining in the set *S_{A}* is smaller than 0.2 · *Mₜₒₜₐₗ,* then Step 4 is repeated with *Th_{a,b}* increased by 3 dB. | |

**[Table 10]**

| | |
|---|---|
| | 7) For a candidate single-subframe resource *R*_{x,y} remaining in the set *S_{A},* the metric E_{x,y} is defined as the linear average of S-RSSI measured in sub-channels *x+k* for *k* = 0, ... , *L*_{subCH} - 1 in the monitored subframes in Step 2 that can be expressed by ${t}_{y - {P}_{step} ∗ j}^{SL}$ for a non-negative integer *j.* |
| | 8) The UE moves the candidate single-subframe resource *R*_{x,y} with the smallest metric *E*_{x,y} from the set *S_{A}* to *S_{B}.* This step is repeated until the number of candidate single-subframe resources in the set *S_{B}* becomes greater than or equal to 0.2 · *M*ₜₒₜₐₗ. |
| | 9) When the UE is configured by upper layers to transmit using resource pools on multiple carriers, it shall exclude a candidate single-subframe resource *R*_{x,y} from *S_{B}* if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time. |
| The UE shall report set *S_{B}* to higher layers. | |
| If transmission based on random selection is configured by upper layers and when the UE is configured by upper layers to transmit using resource pools on multiple carriers, the following steps are used: | |
| | 1) A candidate single-subframe resource for PSSCH transmission R_{x,y} is defined as a set of *L*_{subCH} contiguous sub-channels with sub-channel *x+j* in subframe ${t}_{y}^{SL}$ where *j =* 0, ... , L_{subCH} - 1. The UE shall assume that any set of *L_{subCH}* contiguous sub-channels included in the corresponding PSSCH resource pool within the time interval [*n* + *T*₁, *n* + *T*₂] corresponds to one candidate single-subframe resource, where selections of *T*₁ and *T*₂ are up to UE implementations under *T*₁ ≤ 4 and *T*_{2*min*}(*prio_{TX}*) ≤ *T*₂ ≤ 100, if *T*_{2*min*}(*prio_{TX}*) is provided by higher layers for *prio_{TX},* otherwise 20 ≤ T₂ ≤ 100. UE selection of *T*₂ shall fulfil the latency requirement. The total number of the candidate single-subframe resources is denoted by*Mₜₒₜₐₗ.* |
| | 2) The set *S_{A}* is initialized to the union of all the candidate single-subframe resources. The set *S_{B}* is initialized to an empty set. |
| | 3) The UE moves the candidate single-subframe resource *R_{x,y}* from the set *S_{A}* to *S_{B}.* |
| | 4) The UE shall exclude a candidate single-subframe resource *R_{x,y}* from *S_{B}* if the UE does not support transmission in the candidate single-subframe resource in the carrier under the assumption that transmissions take place in other carrier(s) using the already selected resources due to its limitation in |
| | the number of simultaneous transmission carriers, its limitation in the supported carrier combinations, or interruption for RF retuning time. |
| The UE shall report set *S_{B}* to higher layers. | |

FIG. 7 shows three cast types, based on an embodiment of the present disclosure. The embodiment of FIG. 7 may be combined with various embodiments of the present disclosure. Specifically, FIG. 7(a) shows a broadcast type of SL communication, FIG. 7(b) shows a unicast type of SL communication, and FIG. 7(c) shows a groupcast type of SL communication. In the case of unicast type SL communication, a UE may perform one-to-one communication with other UEs. In the case of groupcast type SL communication, a UE may perform SL communication with one or more UEs in a group to which it belongs. In various embodiments of the present disclosure, SL groupcast communication may be replaced by SL multicast communication, SL one-to-many communication, and the like.

In this specification, the wording "configuration or definition" may be interpreted as being configured (in advance) by a base station or network (e.g., through predefined signaling (e.g., SIB signaling, MAC signaling, RRC signaling). For example, "A may be configured" may include "a base station or network (pre)configures/defines or informs the UE of A". Alternatively, the wording "configuration or definition" may be interpreted as being configured or defined in advance by the system. For example, "A may be configured" may include "A is configured/defined in advance by the system".

Refer to the standard documentation, some procedures and technical specifications that are related to this disclosure are as follows.

**[Table 1]**

| 3GPP TS 38.321 V16.2.1 | |
|---|---|
| The MAC entity may be configured by RRC with a DRX functionality that controls the UE's PDCCH monitoring activity for the MAC entity's C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, and AI-RNTI. When using DRX operation, the MAC entity shall also monitor PDCCH according to requirements found in other clauses of this specification. When in RRC_CONNECTED, if DRX is configured, for all the activated Serving Cells, the MAC entity may monitor the PDCCH discontinuously using the DRX operation specified in this clause; otherwise the MAC entity shall monitor the PDCCH as specified in TS 38.213 [6]. | |
| | NOTE 1: If Sidelink resource allocation mode 1 is configured by RRC, a DRX functionality is not configured. |
| RRC controls DRX operation by configuring the following parameters: | |
| | *- drx-onDurationTimer.* the duration at the beginning of a DRX cycle; |
| | *- dlx-SlotOffset*: the delay before starting the *drx-onDurationTimer,* |
| | *- drx-InactivityTimer*: the duration after the PDCCH occasion in which a PDCCH indicates a new UL or DL transmission for the MAC entity; |
| | *- drx-RetransmissionTimerDL* (per DL HARQ process except for the broadcast process): the maximum duration until a DL retransmission is received; |
| | *- drx-RetransmissionTimerUL* (per UL HARQ process): the maximum duration until a grant for UL retransmission is received; |
| | *- drx-LongCycleStartOffset* the Long DRX cycle and *drx-StartOffsetwhich* defines the subframe where the Long and Short DRX cycle starts; |
| | *- drx-ShortCycle* (optional): the Short DRX cycle; |
| | *- drx-ShortCycleTimer (optional):* the duration the UE shall follow the Short DRX cycle; |
| | *- drx-HARQ-RTT-TimerDL* (per DL HARQ process except for the broadcast process): the minimum duration before a DL assignment for HARQ retransmission is expected by the MAC entity; |
| | *- drx-HARQ-RTT-TimerUL* (per UL HARQ process): the minimum duration before a UL HARQ retransmission grant is expected by the MAC entity; |
| | *- ps-Wakeup* (optional): the configuration to start associated drx-*onDurationTimer* in case DCP is monitored but not detected; |
| | *- ps-TransmitOtherPeriodicCSI* (optional): the configuration to report periodic CSI that is not L1-RSRP on PUCCH during the time duration indicated by *drx-onDurationTimer* in case DCP is configured but associated *drx-onDurationTimer* is not started; |
| | *- ps-TransmitPeriodicL1-RSRP* (optional): the configuration to transmit periodic CSI that is L1-RSRP on PUCCH during the time duration indicated by *drx-onDurationTimer* in case DCP is configured but associated drx-*onDurationTimer* is not started. |
| Serving Cells of a MAC entity may be configured by RRC in two DRX groups with separate DRX parameters. When RRC does not configure a secondary DRX group, there is only one DRX group and all Serving Cells belong to that one DRX group. When two DRX groups are configured, each Serving Cell is uniquely assigned to either of the two groups. The DRX parameters that are separately configured for each DRX group are: *drx-onDurationTimer, drx-InactivityTimer.* The DRX parameters that are common to the DRX groups are: *drx-SlotOffset, drx-RetransmissionTimerDL, drx-RetransmissionTimerUL, drx-LongCycleStartOffset, drx-ShortCycle* (optional), *drx-ShortCycleTimer* (optional), *drx-HARQ-RTT-TimerDL,* and *drx-HARQ-RTT-TimerUL.* | |

**[Table 12]**

| | | | |
|---|---|---|---|
| When a DRX cycle is configured, the Active Time for Serving Cells in a DRX group includes the time while: | | | |
| | *- drx-onDurationTimer* or *drx-InactivityTimer configured* for the DRX group is running; or | | |
| | *- drx-RetransmissionTimerDL* or *drx-RetransmissionTimerUL* is running on any Serving Cell in the DRX group; or | | |
| | *- ra-ContentionResolutionTimer* (as described in clause 5.1.5) or *msgB-ResponseWindow* (as described in clause 5.1.4a) is running; or | | |
| | - a Scheduling Request is sent on PUCCH and is pending (as described in clause 5.4.4); or | | |
| | - a PDCCH indicating a new transmission addressed to the C-RNTI of the MAC entity has not been received after successful reception of a Random Access Response for the Random Access Preamble not selected by the MAC entity among the contention-based Random Access Preamble (as described in clauses 5.1.4 and 5.1.4a). | | |
| When DRX is configured, the MAC entity shall: | | | |
| | 1> if a MAC PDU is received in a configured downlink assignment: | | |
| | | 2> start the *drx-HARQ-RTT-TimerDL* for the corresponding HARQ process in the first symbol after the end of the corresponding transmission carrying the DL HARQ feedback; | |
| | | 2> stop the *drx-RetransmissionTimerDL* for the corresponding HARQ process. | |
| | 1> if a MAC PDU is transmitted in a configured uplink grant and LBT failure indication is not received from lower layers: | | |
| | | 2> start the *drx-HARQ-RTT-TimerUL* for the corresponding HARQ process in the first symbol after the end of the first repetition of the corresponding PUSCH transmission; | |
| | | 2> stop the *drx-RetransmissionTimerUL* for the corresponding HARQ process. | |
| | 1> if a *drx-HARQ-RTT-TimerDL* expires: | | |
| | | 2> if the data of the corresponding HARQ process was not successfully decoded: | |
| | | | 3> start the *drx-RetransmissionTimerDL* for the corresponding HARQ process in the first symbol after the expiry of *drx-HARQ-RTT-TimerDL.* |
| | 1> if a *drx-HARQ-RTT-TimerUL* expires: | | |
| | | 2> start the *drx-RetransmissionTimerUL* for the corresponding HARQ process in the first symbol after the expiry of *drx-HARQ-RTT-TimerUL.* | |
| | 1> if a DRX Command MAC CE or a Long DRX Command MAC CE is received: | | |
| | | 2> stop *drx-onDurationTimer* for each DRX group; | |
| | | 2> stop *drx-InactivityTimer for* each DRX group. | |
| | 1> if *drx-InactivityTimer* for a DRX group expires: | | |
| | | 2> if the Short DRX cycle is configured: | |
| | | | 3> start or restart *drx-ShortCycleTimer for* this DRX group in the first symbol after the expiry of *drx-InactivityTimer,* |
| | | | 3> use the Short DRX cycle for this DRX group. |
| | | 2> else: | |
| | | | 3> use the Long DRX cycle for this DRX group. |
| | 1> if a DRX Command MAC CE is received: | | |
| | | 2> if the Short DRX cycle is configured: | |
| | | | 3> start or restart *drx-ShortCycleTimer* for each DRX group in the first symbol after the end of DRX Command MAC CE reception; |
| | | | 3> use the Short DRX cycle for each DRX group. |
| | | 2> else: | |
| | | | 3> use the Long DRX cycle for each DRX group. |

**[Table 13]**

| | | | | |
|---|---|---|---|---|
| | | 1> if *drx-ShortCycleTimer* for a DRX group expires: | | |
| | | | 2> use the Long DRX cycle for this DRX group. | |
| | | 1> if a Long DRX Command MAC CE is received: | | |
| | | | 2> stop *drx-ShortCycleTimer for* each DRX group; | |
| | | | 2> use the Long DRX cycle for each DRX group. | |
| | | 1> if the Short DRX cycle is used for a DRX group, and [(SFN × 10) + subframe number] modulo (*drx*-*ShortCycle*) *=* (*drx-StartOffset*) modulo (*drx-ShortCycle*): | | |
| | | | 2> start *drx-onDurationTimer* for this DRX group after *drx-SlotOffset* from the beginning of the subframe. | |
| | | 1> if the Long DRX cycle is used for a DRX group, and [(SFN × 10) + subframe number] modulo (*drx-LongCycle*) *= drx-StartOffset* | | |
| | | | 2> if DCP monitoring is configured for the active DL BWP as specified in TS 38.213 [6], clause 10.3: | |
| | | | | 3> if DCP indication associated with the current DRX cycle received from lower layer indicated to start *drx-onDurationTimer,* as specified in TS 38.213 [6]; or |
| | | | 3> if all DCP occasion(s) in time domain, as specified in TS 38.213 [6], associated with the current DRX cycle occurred in Active Time considering grants/assignments/DRX Command MAC CE/Long DRX Command MAC CE received and Scheduling Request sent until 4 ms prior to start of the last DCP occasion, or within BWP switching interruption length, or during a measurement gap, or when the MAC entity monitors for a PDCCH transmission on the search space indicated by *recoverySearchSpaceId* of the SpCell identified by the C-RNTI while the *ra-ResponseWindow* is running (as specified in clause 5.1.4); or | |
| | | | 3> if *ps-Wakeup* is configured with value *true* and DCP indication associated with the current DRX cycle has not been received from lower layers: | |
| | | | | 4> start *drx-onDurationTimer* after *drx-SlotOffset* from the beginning of the subframe. |
| | | 2> else: | | |
| | | | 3> start *drx-onDurationTimer* for this DRX group after *drx-SlotOffset* from the beginning of the subframe. | |
| | D NOTE 2: In case of unaligned SFN across carriers in a cell group, the SFN of the SpCell is used to calculate the DRX duration. | | | |
| | 1> if a DRX group is in Active Time: | | | |
| | | 2> monitor the PDCCH on the Serving Cells in this DRX group as specified in TS 38.213 [6]; | | |
| | | 2> if the PDCCH indicates a DL transmission: | | |
| | | | 3> start the *drx-HARQ-RTT-TimerDL* for the corresponding HARQ process in the first symbol after the end of the corresponding transmission carrying the DL HARQ feedback; | |
| | NOTE 3: When HARQ feedback is postponed by PDSCH-to-HARQ_feedback timing indicating a non-numerical k1 value, as specified in TS 38.213 [6], the corresponding transmission opportunity to send the DL HARQ feedback is indicated in a later PDCCH requesting the HARQ-ACK feedback. | | | |
| | | | 3> stop the *drx-RetransmissionTimerDL* for the corresponding HARQ process. | |
| | | | 3> if the PDSCH-to-HARQ_feedback timing indicate a non-numerical k1 value as specified in TS 38.213 [6]: | |
| | | | | 4> start the *drx-RetransmissionTimerDL* in the first symbol after the PDSCH transmission for the corresponding HARQ process. |

**[Table 14]**

| | | | | |
|---|---|---|---|---|
| | | 2> if the PDCCH indicates a UL transmission: | | |
| | | | 3> start the *drx-HARQ-RTT-TimerUL* for the corresponding HARQ process in the first symbol after the end of the first repetition of the corresponding PUSCH transmission; | |
| | | | 3> stop the *drx-RetransmissionTimerUL* for the corresponding HARQ process. | |
| | | 2> if the PDCCH indicates a new transmission (DL or UL) on a Serving Cell in this DRX group: | | |
| | | | 3> start or restart *drx-InactivityTimer* for this DRX group in the first symbol after the end of the PDCCH reception. | |
| | | 2> if a HARQ process receives downlink feedback information and acknowledgement is indicated: | | |
| | | | 3> stop the *drx-RetransmissionTimerUL* for the corresponding HARQ process. | |
| | 1> if DCP monitoring is configured for the active DL BWP as specified in TS 38.213 [6], clause 10.3; and | | | |
| | 1> if the current symbol n occurs within *drx-onDurationTimer duration*; and | | | |
| | 1> if *drx-onDurationTimer* associated with the current DRX cycle is not started as specified in this clause: | | | |
| | | 2> if the MAC entity would not be in Active Time considering grants/assignments/DRX Command MAC CE/Long DRX Command MAC CE received and Scheduling Request sent until 4 ms prior to symbol n when evaluating all DRX Active Time conditions as specified in this clause: | | |
| | | | 3> not transmit periodic SRS and semi-persistent SRS defined in TS 38.214 [7]; | |
| | | | 3> not report semi-persistent CSI configured on PUSCH; | |
| | | | 3> if *ps-TransmitPeriodicL1-RSRP* is not configured with value *true:* | |
| | | | | 4> not report periodic CSI that is L1-RSRP on PUCCH. |
| | | | 3> if *ps-TransmitOtherPeriodicCSI* is not configured with value *true:* | |
| | | | | 4> not report periodic CSI that is not L1-RSRP on PUCCH. |
| | 1> else: | | | |
| | | 2> in current symbol n, if a DRX group would not be in Active Time considering grants/assignments scheduled on Serving Cell(s) in this DRX group and DRX Command MAC CE/Long DRX Command MAC CE | | |
| | | | received and Scheduling Request sent until 4 ms prior to symbol n when evaluating all DRX Active Time conditions as specified in this clause: | |
| | | | 3> not transmit periodic SRS and semi-persistent SRS defined in TS 38.214 [7] in this DRX group; | |
| | | | 3> not report CSI on PUCCH and semi-persistent CSI configured on PUSCH in this DRX group. | |
| | | 2> if CSI masking (*csi-Mask*) is setup by upper layers: | | |
| | | | 3> in current symbol n, if *drx-onDurationTimer* of a DRX group would not be running considering grants/assignments scheduled on Serving Cell(s) in this DRX group and DRX Command MAC CE/Long DRX Command MAC CE received until 4 ms prior to symbol n when evaluating all DRX Active Time conditions as specified in this clause; and | |
| | | | | 4> not report CSI on PUCCH in this DRX group. |
| | NOTE 4: If a UE multiplexes a CSI configured on PUCCH with other overlapping UCI(s) according to the procedure specified in TS 38.213 [6] clause 9.2.5 and this CSI multiplexed with other UCI(s) would be reported on a PUCCH resource outside DRX Active Time of the DRX group in which this PUCCH is configured, it is up to UE implementation whether to report this CSI multiplexed with other UCI(s). | | | |
| Regardless of whether the MAC entity is monitoring PDCCH or not on the Serving Cells in a DRX group, the MAC entity transmits HARQ feedback, aperiodic CSI on PUSCH, and aperiodic SRS defined in TS 38.214 [7] on the Serving Cells in the DRX group when such is expected. | | | | |
| The MAC entity needs not to monitor the PDCCH if it is not a complete PDCCH occasion (e.g. the Active Time starts or ends in the middle of a PDCCH occasion). | | | | |

In addition, SL DRX operation will be newly supported in Release 17 NR SL (sidelink) operation. In the following description, "when, if, in case of" may be replaced with "based on" in the following description.

Further, in an embodiment(s) of the present disclosure, a method for delivering recommended (or, preferred) transmission resource information or assistance information for selecting a transmission resource for a UE performing SL DRX operation to a counterpart UE via an Inter UE Coordination (IUC) MAC CE is proposed.

Further, in an embodiment(s) of the present disclosure, when UEs transmit an IUC message to perform an IUC operation in NR V2X communication, the logical channel (LCH) priority of an IUC message is newly defined such that the IUC message has a different priority from other sidelink messages (PC5 RRC message, MAC CE, SL Data), and a SL LCP (Logical Channel Prioritization) operation based on the newly defined LCH priority of the IUC message is proposed. In the following description, "when, if, in case of" can be replaced by "based on".

In the following, a method for delivering resource information in which an active time of sidelink (SL) discontinuous reception (DRX) is considered through an Inter UE Coordination (IUC) medium access control (MAC) control element (CE) is described.

An SL DRX operation and resource selection procedure in the prior art may include the following.

For example, a receiving UE performing an SL DRX operation may monitor a PSCCH/PSSCH of a transmitting UE during an SL DRX active time duration. For example, the SL DRX active time may include the time during which an SL DRX on-duration timer, an SL DRX inactivity timer, or an SL DRX retransmission timer is running. For example, a receiving UE may successfully receive a transmitting UE's PSCCH/PSSCH (SCI and SL data) only if the transmitting UE selects a resource within the receiving UE's SL DRX active time duration and transmits SCI and SL data based on the resource.

For example, if the MAC layer entity of a transmitting UE selects a transmission resource using a sensing-based mode 2 resource selection scheme (using an SL normal resource pool), when resource (re)selection is triggered, the MAC entity may deliver SL DRX active time information of a receiving UE to the physical (PHY) layer. For example, the SL DRX active time information may include information of an interval that is currently DRX active time by a timer related to an SL DRX active time that is currently being operated by the receiving UE.

And, if a transmitting UE uses a sensing-based resource selection operation, a PHY layer may select a set of candidate resources from among resources located within the DRX active time of the receiving UE (included in a Tx normal resource pool) or resources located outside the SL DRX active time of a receiving UE (included in a Tx normal resource pool) by referring to the SL DRX active time information of the receiving UE delivered from the MAC entity, and inform the MAC entity of the set of candidate resources. Thereafter, a MAC entity may select a resource from a set of candidate resources received from a PHY layer, and transmit SL data based on the selected resource to a receiving UE performing an SL DRX operation.

Further, for example, a receiving UE may, upon receipt of a PSCCH/PSSCH transmitted by a transmitting UE, operate an SL DRX inactivity timer or an SL DRX retransmission timer, and perform active mode operation or monitoring of PSCCH/PSSCHs transmitted by the transmitting UE. For example, to synchronize its SL DRX operation with that of a receiving UE, a transmitting UE may determine that the receiving UE will be operating in active mode by starting its SL DRX inactivity timer or SL DRX retransmission timer after it has transmitted a PSCCH/PSSCH.

However, in this case, a problem may arise in which a transmitting UE performs SL communication (e.g., data transmission) based on the judgment that a receiving UE will operate in active mode by starting an SL DRX inactivity timer or an SL DRX retransmission timer after the transmitting UE transmits a PSCCH/PSSCH, while the receiving UE does not receive the PSCCH/PSSCH transmitted by the transmitting UE and therefore does not start an SL DRX inactivity timer or an SL DRX retransmission timer, and thus transitions to sleep mode. In other words, a transmitting UE determines that a receiving UE is operating in active mode and selects the resource within that time as a transmission resource to transmit data, while the receiving UE is operating in sleep mode at the time of the transmission resource, which may cause a problem of not receiving the data transmitted by the transmitting UE.

In order to solve the aforementioned problems, a method is proposed in the present disclosure for including the following DRX active time information in an IUC MAC CE transmitted by a UE-A to a UE-B. For example, in this embodiment, UE-A may be a UE that transmits an IUC MAC CE, UE-B may be a UE that receives the IUC MAC CE, selects a resource based on the resource set information included in the IUC MAC CE and transmits SL data, and a UE that requests a transmission of the IUC MAC CE to UE-A by transmitting an IUC request MAC CE to UE-A.
1. An active time of a receiving UE (e.g., UE-A), within which an SL DRX timer (an on-duration timer, an inactivity timer, a retransmission timer) is currently running.
2. An active time during which an on-duration timer of a receiving UE (e.g., UE-A) will run in the future.
3. An active time during which an inactivity timer of a receiving UE (e.g., UE-A) will run in the future.
4. An active time during which a retransmission timer of a receiving UE (e.g., UE-A) will run in the future.

For example, a UE-B (e.g., an SL data transmitting UE, an IUC MAC CE receiving UE) may select a transmission resource by limiting the range of resources belonging to an SL DRX active time information of UE-A transmitted by a UE-A (e.g., an SL data receiving UE, an IUC MAC CE transmitting UE), and may transmit SL data to UE-A based on the transmission resource. For example, a UE-B may send an IUC request MAC CE to a UE-A to request SL DRX active time information of a UE-A. In this case, an IUC request MAC CE may include a cause indicating a DRX active time information request of a UE-A.

Alternatively, for example, a method for transmitting the following information in an IUC MAC CE transmitted by a UE-A to a UE-B is proposed. In this embodiment, a UE-A may be a UE that transmits an IUC MAC CE. For example, a UE-B may be a UE that, after receiving an IUC MAC CE, selects a resource based on resource set information included in the IUC MAC CE, transmits SL data based on the resource, and requests a transmission of the IUC MAC CE to a UE-A by transmitting an IUC request MAC CE to the UE-A.
1. a recommended resource set, in which an active time of a receiving UE(e.g., UE-A), during which an SL DRX timer (on-duration timer, inactivity timer, retransmission timer) is currently running, is considered.
2. a set recommended resource set in which an active time, during which an on-duration timer of a receiving UE (e.g., UE-A) will run in the future, is considered.
3. a recommended resource set, in which an active time, during which an inactivity timer of a receiving UE (e.g., UE-A) will run in the future, is considered.
4. a recommended resource set, in which an active time, during which a retransmission timer of a receiving UE (e.g., UE-A) will run in the future, is considered.

For example, a UE-B (e.g., an SL data transmitting UE, an IUC MAC CE receiving UE) may select a transmission resource limited to a set of recommended resources that are transmitted by a UE-A (e.g., an SL data receiving UE, an IUC MAC CE transmitting UE) within an SL DRX active time of the UE-A, and transmit SL data to the UE-A based on the transmission resource. For example, a UE-B may transmit an IUC request MAC CE to a UE-A to request a recommended resource set that is within a DRX active time of the UE-A. Here, for example, an IUC Request MAC CE may include a cause indicating a request for a recommended resource set information within a DRX active time of UE-A.

According to one embodiment of the present disclosure, a UE-A and a UE-B may perform the following operations.

Step 1) a transmitting UE (UE-B) may trigger a transmission of an IUC MAC CE by transmitting an IUC request MAC CE to the counterpart receiving UE (UE-A) upon triggering a resource selection. Alternatively, for example, a transmitting UE may trigger a transmission of an IUC MAC CE by indicating via SCI instead of an IUC request MAC CE.

Step 2) When a receiving UE (UE-A) is triggered to transmit an IUC MAC CE via an IUC request MAC CE or SCI, the receiving UE may generate an IUC MAC CE and transmit the IUC MAC CE to a transmitting UE (UE-B) including recommended resource set information or an SL DRX active time (an SL DRX active time as described in an embodiment of the present disclosure) information, in which the SL DRX active time is considered.

Step 3) When a transmitting UE (UE-B) receives an IUC MAC CE from a receiving UE (UE-A), it may select a transmission resource based on the recommended resource set information or SL DRX active time information included in the MAC CE, and transmit SL data to the receiving UE (UE-A) based on the transmission resource.

The following describes the priority order of IUC messages and a Logical Channel Prioritization (LCP) operation method.

In the present disclosure, the SL priority (or SL LCH priority) of an IUC message is defined as follows for LCP operation at the MAC entity for an IUC message.

The following shows SL priorities of an IUC message. They are shown from highest to lowest, that is, data from a SCCH may be the highest priority.
1. data from an SCCH (e.g., PC5-S message, PC5 RRC message)
2. SL CSI reporting MAC CE
3. IUC MAC CE (or, the priority order of an IUC MAC CE is the same as an SL CSI reporting MAC CE, and may be higher than the priority order of an SL DRX command MAC CE.)
4. IUC request MAC CE (a MAC CE transmitted for requesting an IUC MAC CE)
5. SL DRX command MAC CE
6. data from any STCH (e.g., SL user data)

Or,
1. data from an SCCH (e.g., PC5-S message, PC5 RRC message)
2. SL CSI reporting MAC CE
3. IUC request MAC CE
4. IUC MAC CE
5. SL DRX command MAC CE
6. data from any STCH (e.g., SL user data)

Or,
1. data from an SCCH (e.g., PC5-S message, PC5 RRC message)
2. IUC MAC CE message
3. IUC request MAC CE
4. SL CSI reporting MAC CE
5. SL DRX command MAC CE
6. data from any STCH (e.g., SL user data)

Or,
1. data from an SCCH (e.g., PC5-S message, PC5 RRC message)
2. IUC request MAC CE
3. IUC MAC CE message
4. SL CSI reporting MAC CE
5. SL DRX command MAC CE
6. data from any STCH (e.g., SL user data)

Or,
1. data from an SCCH (e.g., PC5-S message, PC5 RRC message)
2. SL CSI reporting MAC CE
3. SL DRX command MAC CE
4. IUC MAC CE (or, the priority of an IUC MAC CE may be the same as an SL DRX command MAC CE.)
5. IUC request MAC CE
6. data from any STCH (e.g., SL user data)

Or,
1. data from an SCCH (e.g., PC5-S message, PC5 RRC message)
2. SL CSI reporting MAC CE
3. SL DRX command MAC CE
4. IUC request MAC CE
5. IUC MAC CE (or, the priority order of an IUC MAC CE may be the same as STCH.)
6. data from any STCH (e.g., SL user data)

Or,
1. data from an SCCH (e.g., PC5-S message, PC5 RRC message)
2. SL CSI reporting MAC CE
3. SL DRX command MAC CE
4. data from any STCH (e.g., SL user data)
5. IUC MAC CE
6. IUC request MAC CE

Or,
1. data from an SCCH (e.g., PC5-S message, PC5 RRC message)
2. SL CSI reporting MAC CE
3. SL DRX command MAC CE
4. data from any STCH (e.g., SL user data)
5. IUC request MAC CE
6. IUC MAC CE

Or,
1. IUC MAC CE
2. IUC request MAC CE
3. data from an SCCH (e.g., PC5-S message, PC5 RRC message)
4. SL CSI reporting MAC CE
5. SL DRX command MAC CE
6. data from any STCH (e.g., SL user data)

Or,
1. IUC request MAC CE
2. IUC MAC CE (or, the priority order of an IUC MAC CE may be the same as SCCH)
3. data from an SCCH (e.g., PC5-S message, PC5 RRC message)
4. SL CSI reporting MAC CE
5. SL DRX command MAC CE
6. data from any STCH (e.g., SL user data)

In this disclosure, an LCP operation may be performed as follows, according to the LCH priority of the IUC message proposed earlier.

For example, if the MAC entity of a UE has a plurality of MAC SDUs and MAC CEs for a new transmission, the MAC entity may construct a MAC PDU by selecting a MAC SDU or MAC CE in the order of the highest prioritized destination of an LCH (i.e., according to the decreasing order of the SL LCH priority, or based on the decreasing order of the SL LCH priority). For example, if a MAC entity of a UE has a plurality of MAC SDUs and MAC CEs as shown below, the MAC entity may perform an LCP operation (i.e., an operation to generate a MAC PDU) based on the LCH priority of an IUC MAC CE proposed herein as follows.

### Embodiment 1.

For example, a MAC entity of a UE might have a plurality of MAC SDUs and MAC CEs, such as the following.
1. data from an SCCH (e.g., PC5-S message, PC5 RRC message)
2. IUC MAC CE message
3. SL CSI reporting MAC CE

For example, a MAC entity may first fill a MAC PDU with an SDU for data from an SCCH, based on the SL priority (or SL LCH priority) of an IUC MAC CE message proposed in this disclosure. After filling the MAC PDU with the SDU for data from an SCCH, if space remains in the MAC PDU, the MAC entity may fill the MAC PDU with an IUC MAC CE message, followed by an SL CSI reporting MAC CE, in that order. If a MAC PDU cannot be filled with all MAC SDUs and MAC CEs (data from an SCCH, IUC MAC CE messages, and SL CSI reporting MAC CEs), the MAC entity may fill the MAC PDU with MAC SDUs and MAC CEs in the SL priority order proposed herein. That is, the MAC entity may fill the MAC PDU as much as possible in descending order of the SL priority order.

For example, Example 1 above is an example of an embodiment where the SL priority of an IUC MAC CE message is higher than an SL CSI reporting MAC CE. If the proposal where the SL priority of an SL CSI reporting MAC CE is configured to be higher than an IUC MAC CE message is applied, then when the MAC entity constructs a MAC PDU, the MAC PDU may be generated with an SL CSI reporting MAC CE included in the MAC PDU before an IUC MAC CE message.

### Embodiment 2.

For example, a MAC entity of a UE might have a plurality of MAC SDUs and MAC CEs, such as the following.
1. IUC MAC CE message
2. SL CSI reporting MAC CE
3. Data from an STCH (e.g., SL user data)

For example, based on the SL priority (or SL LCH priority) of an IUC MAC CE message proposed herein, a MAC entity may first fill a MAC PDU with an IUC MAC CE message. After filling the MAC PDU with the IUC MAC CE message, if space remains in the MAC PDU, the MAC entity may fill the MAC PDU with an SL CSI MAC CE, followed by the MAC SDU for data from the STCH, in that order. If a MAC PDU cannot be filled with all MAC CEs and MAC SDUs (IUC MAC CE messages, SL CSI reporting MAC CEs, and data from the STCH), a MAC entity may fill the MAC PDU with a MAC CE and MAC SDU in the SL priority order proposed in this disclosure.

For example, Example 2 above is an example of an embodiment where the SL priority of an IUC MAC CE message is higher than an SL CSI reporting MAC CE. If the proposal where the SL priority of an SL CSI reporting MAC CE is configured to be higher than an IUC MAC CE message is applied, then when a MAC entity constructs a MAC PDU, the MAC PDU may be generated with an SL CSI reporting MAC CE included in the MAC PDU before an IUC MAC CE message.

According to one embodiment of the present disclosure, when a MAC entity of a UE has a plurality of MAC CEs, MAC SDUs, and IUC MAC CE messages to transmit to a destination UE, a method for constructing, by a MAC entity, a MAC PDU by selecting a destination SDU or destination MAC CE having the highest LCH priority based on the SL priority (or, SL LCH priority) order proposed in the present disclosure.

For example, each of embodiments 1 and 2 is merely one example, and a UE may perform an operation to configure or generate a MAC PDU according to various priority orders for the IUC MAC CE proposed in this disclosure.

A UL/SL prioritization may be performed based on an SL priority value (or order) of an IUC message proposed in the present disclosure. For example, the prioritization may be an operation to determine a transmission priority when there are both uplink (UL) and SL transmissions pending at a UE at the same time.

According to one embodiment of the present disclosure, a destination Layer 2 ID, which is included in a MAC header when an IUC message is transmitted, is newly defined as an independent Layer 2 ID to distinguish between transmissions of IUC messages. For example, in the prior art, a destination L2 ID for a broadcast message, a destination L2 ID for a groupcast message, and a destination L2 ID for a unicast message are defined separately. Also, in the prior art, when multiplexing MAC PDUs, multiplexing was only supported for the same cast type. That is, unicasts could only be muxed with unicasts, groupcasts could only be muxed with groupcasts, and broadcasts could only be muxed with broadcasts.

In the present disclosure, an independent destination L2 ID is defined for IUC messages only. That is, according to embodiments of the present disclosure, a method is proposed for a MAC entity to only MUX IUC messages with each other when performing MUX of MAC PDUs. That is, a method is proposed for ensuring that non-IUC messages and IUC messages are not MUXed on the same MAC PDU. In addition, an independent destination L2 ID for IUC messages may be a common destination L2 ID without distinction for broadcast/groupcast/unicast (i.e., cast type). That is, for example, a UE may perform all of broadcast/groupcast/unicast based on a common destination L2 ID. In other words, a common destination L2 ID may be available for all cast types.

Alternatively, for example, an independent destination L2 ID for IUC messages only may be defined as a separate destination L2 ID that separately distinguishes broadcast/groupcast/unicast. That is, to transmit an IUC message by unicast, the unicast destination L2 ID for an IUC message may be used, to transmit an IUC message by groupcast, the groupcast destination L2 ID for an IUC message may be used, and to transmit an IUC message by broadcast, the broadcast destination L2 ID for an IUC message may be used.

According to one embodiment of the present disclosure, a method for transmitting an IUC message using the same unicast destination L2 ID, groupcast destination L2 ID, and broadcast L2 ID used in the prior art (Release 16 NR V2X) is also proposed. When an IUC message is transmitted using any of the existing (unicast/groupcast/broadcast) destination L2 IDs, a receiving UE may not be able to distinguish whether the message is an IUC message or not upon receiving the message. Therefore, it is proposed in this disclosure to add a distinguishing identifier to SCI that indicates that the PSSCH associated with that SCI is an IUC message. For example, in this way, even if a transmitting UE transmits an IUC message using the same unicast destination L2 ID, groupcast destination L2 ID, and broadcast L2 ID used in the prior art (Release 16 NR V2X), a receiving UE may receive the message and distinguish through the SCI whether the message is an IUC message or not.

According to one embodiment of the present disclosure, when a UE MAC entity has a plurality of MAC CEs and MAC SDUs and IUC MAC CE messages to transmit to peer destination UEs, a method is proposed wherein the MAC entity configures a MAC PDU by selecting the destination SDU or destination MAC CE with the highest LCH priority based on the SL priority (or, SL LCH priority) order proposed in the present disclosure. A method is also proposed wherein the receiving UE may receive IUC messages in a well- distinguished manner.

According to one embodiment of the present disclosure, a method is provided for delivering a destination ID by a transmitting UE to a receiving UE in SL communication. For example, a full destination ID that the transmitting UE intends to deliver to the receiving UE may be 24 bits. For example, the transmitting UE may divide the full destination ID into a 8-bit partial destination L2 ID and a 16-bit destination L1 ID. In this case, for example, the destination L1 ID may be the 16 least significant bits (LSBs) of the full destination ID. Thereafter, the transmitting UE may include the partial destination L2 ID in a MAC header in a MAC PDU to be transmitted, and may include the destination L1 ID in a SCI (e.g., a second SCI) to be transmitted with the MAC PDU. Thereafter, for example, a receiving UE receiving the SCI and MAC PDU may obtain the full destination L2 ID by combining the partial destination L2 ID with the destination L1 ID.

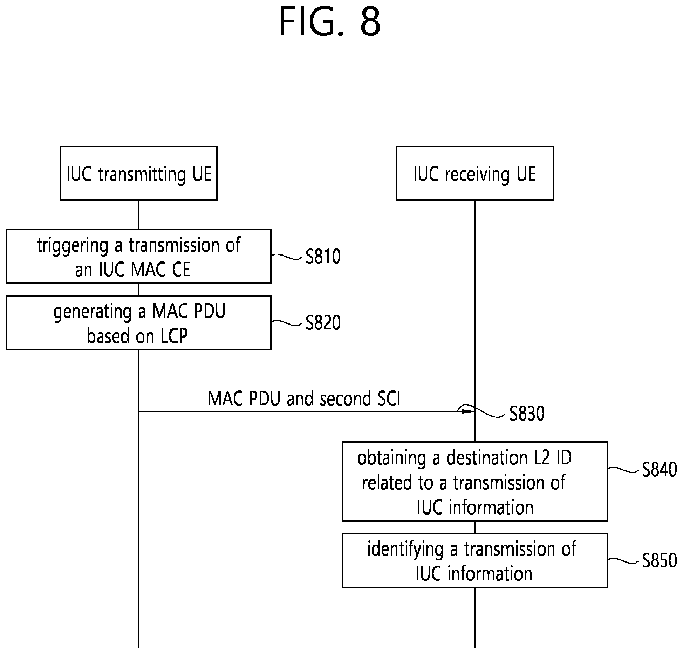

FIG. 8 shows a procedure for an IUC receiving UE to identify a transmission of IUC information, according to one embodiment of the present disclosure. The embodiment of FIG. 8 may be combined with various embodiments of the present disclosure.

Referring to FIG. 8, in step S810, an IUC transmitting UE may trigger a transmission of an IUC MAC CE. For example, the transmission of the IUC MAC CE may be triggered based on a request for IUC information from an IUC receiving UE. Alternatively, for example, the transmission of the IUC MAC CE may be triggered based on a condition, such as when a specific condition is met.

In step S820, the IUC transmitting UE may generate a MAC PDU, based on LCP. For example, the priority order may be considered in the LCP according to various embodiments of the present disclosure. For example, the MAC PDU generated based on the procedure of step S820 may include an IUC MAC CE.

In step S830, the IUC transmitting UE may transmit the MAC PDU and second SCI to the IUC receiving UE. For example, a MAC header included in the MAC PDU may include a partial destination L2 ID. For example, the second SCI may include a destination L1 ID. For example, the partial destination L2 ID and the destination L1 ID may be destination IDs related to a transmission of IUC information.

In step S840, the IUC receiving UE may obtain a destination L2 ID related to a transmission of the IUC information, based on the MAC PDU and the second SCI. For example, by combining a partial destination L2 ID included in a MAC header of the MAC PDU and a destination L1 ID included in the second SCI, the IUC receiving UE may obtain a full destination L2 ID related to a transmission of IUC information.

At step S850, the IUC receiving UE may check the full destination L2 ID and identify that the MAC PDU is a MAC PDU for a transmission of IUC information. That is, the IUC receiving UE may identify a transmission of IUC information.

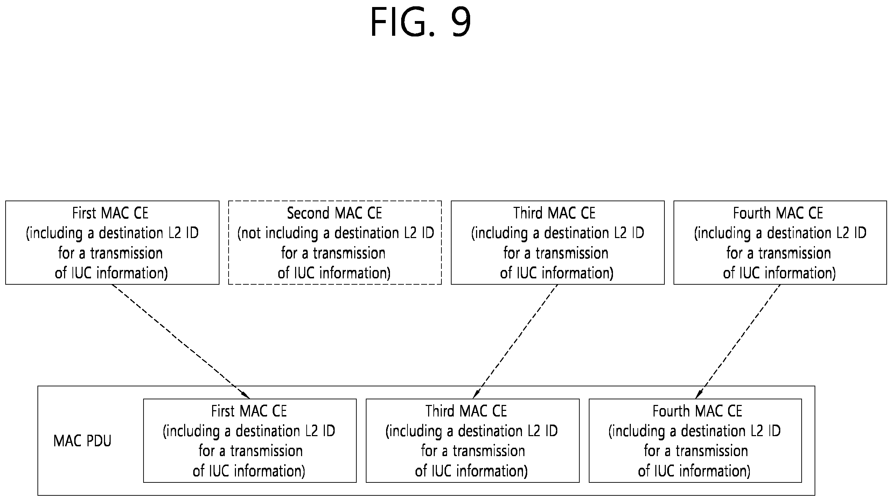

FIG. 9 shows an embodiment in which an IUC transmitting UE generates a MAC PDU based on a destination ID for transmission of IUC information, according to one embodiment of the present disclosure. The embodiment of FIG. 9 may be combined with various embodiments of the present disclosure.

Referring to FIG. 9, a first MAC CE to a fourth MAC CE is shown. Of these, it is assumed that the first MAC CE, the third MAC CE, and the fourth MAC CE each include a destination L2 ID for transmission of the IUC information. For example, when a transmission of the IUC information is triggered to an IUC transmitting UE, and the IUC transmitting UE generates a MAC PDU for the transmission of the IUC information, the IUC transmitting UE may generate a MAC PDU by multiplexing (MUXing) only MAC CEs that include a destination L2 ID for a transmission of the IUC information.

For example, referring to FIG. 9, only the first MAC CE, the third MAC CE, and the fourth MAC CE that include a destination L2 ID for a transmission of the IUC information are included in the MAC PDU, and the second MAC CE that does not include a destination L2 ID for transmission of the IUC information is not included. In other words, the multiplexing operation for generating a MAC PDU for transmission of IUC information may only allow a MAC CE that includes a destination L2 ID for a transmission of tUC information to be included in a MAC PDU.

For example, an operation of the present disclosure may be limitedly applied per PC5-RRC connection (or per SL unicast link, or per pair of source/destination L2 IDs, or per direction of a pair of source/destination L2 IDs, or per direction of a pair of source/destination L2 IDs). Alternatively, for example, an operation of the present disclosure may be limitedly applied per all PC5-RRC connections (or per all SL unicast links, or per all pairs of source/destination IDs).

An SL DRX configuration referred to in the present disclosure may include at least one of the following parameters.

**[Table 15]**

| | |
|---|---|
| | • Sidelink DRX configurations |
| ✔ *SL drx-onDurationTimer*: the duration at the beginning of a SL DRX Cycle; | |
| ✔ *SL drx-SlotOffset* the delay before starting the sl *drx-onDurationTimer;* | |
| ✔ *SL drx-InactivityTimer*: the duration after the PSCCH occasion in which a PSCCH indicates a new SL transmission for the MAC entity; | |
| ✔ *SL drx-StartOffset* the subframe where the SL DRX cycle start; | |
| ✔ *SL drx-Cycle:* the SL DRX cycle; | |
| ✔ *SL drx-HARQ-RTT-Timer* (per HARQ process or per sidelink process): the minimum duration before an assignment for HARQ retransmission is expected by the MAC entity. | |
| ✔ *SL drx-RetransmissionTimer* (per HARQ process or per sidelink process): the maximum duration until a retransmission is received. | |

For example, the Uu DRX timer below referenced in this disclosure may be used for the following purposes.

drx-HARQ-RTT-TimerSL timer: it may represent an interval where a transmitting UE (UE supporting a Uu DRX operation) performing SL communication based on SL resource allocation mode 1 does not perform monitoring for a PDCCH (or, DCI) for SL mode 1 resource allocation from a base station.

drx-RetransmissionTimerSL timer: It may indicate an interval during which a transmitting UE (UE supporting a Uu DRX operation) performing SL communication based on SL resource allocation mode 1 performs monitoring for a PDCCH (or, DCI) for SL mode 1 resource allocation from a base station.

The following SL DRX timers mentioned in this disclosure may be used for the following purposes.

SL DRX on-duration timer: Indicates the period of time during which a UE performing SL DRX operation should operate as the default active time to receive PSCCH/PSSCH from other UE.

SL DRX inactivity timer: may represent an interval that extends an SL DRX on-duration interval, which is an interval during which a UE performing SL DRX operation must operate as active time by default to receive PSCCH/PSSCH from other UE. That is, an SL DRX on-duration timer may be extended by the SL DRX inactivity timer interval. Furthermore, when a UE receives a PSCCH for a new TB (first SCI and/or second SCI) or a new packet (new PSSCH transmission) from other UE, the UE may extend the SL DRX on-duration timer by starting an SL DRX inactivity timer.

SL DRX HARQ RTT timer: may indicate an interval during which a UE performing SL DRX operation may operate in sleep mode until it receives a retransmission packet (or PSSCH assignment) from other UE. That is, if a UE starts the SL DRX HARQ RTT timer, the UE may determine that other UE will not transmit a sidelink retransmission packet to it until the SL DRX HARQ RTT timer expires and may operate in sleep mode during that timer. Or, the UE may not perform monitoring of an SL channel/signal which the counterpart UE transmits, until the expiration of an SL DRX HARQ RTT timer.

SL DRX retransmission timer: may indicate an interval of time during which a UE performing SL DRX operation is active time to receive retransmission packets (or PSSCH assignments) transmitted by other UE. For example, when an SL DRX HARQ RTT timer expires, an SL DRX retransmission timer may start. During this timer period, a UE may monitor a reception of retransmission sidelink packets (or PSSCH allocations) transmitted by other UE.

In addition, in the following description, the names of the timers (SL DRX On-Duration Timer, SL DRX Inactivity timer, SL HARQ RTT Timer, SL DRX Retransmission Timer, etc.) are exemplary, and timers that perform the same/similar functions based on what is described in each timer can be considered the same/similar timer regardless of the name.

The proposal in this disclosure may be a solution that may also be applied and extended to address the problem of loss due to interruption in Uu bandwidth part (BWP) switching.

Furthermore, the proposal of the present disclosure may be a solution that may also be applied and extended to address the problem of loss due to interruption caused by SL BWP switching, for example, when a UE supports SL multiple BWP.

The proposals in this disclosure may be extended to parameters (and timers) included in default/common SL DRX configurations or default/common SL DRX patterns or default/common SL DRX configurations, as well as parameters (and timers) included in UE pair specific SL DRX configurations or UE pair specific SL DRX patterns or UE pair specific SL DRX configurations.

Furthermore, for example, an on-duration term referred to in the present disclosure may be extended and interpreted as an active time interval, and an off-duration term referred to in the present disclosure may be extended and interpreted as a sleep time interval. For example, an active time may mean a period of time when a UE is operating in a wake up state (RF module is on) to receive/transmit radio signals. For example, a sleep time may mean an interval during which a UE operates in a sleep mode state (RF module is off) to save power. For example, in the sleep time, it does not imply that a transmitting UE is obligated to operate in sleep mode, i.e., if needed, the UE may be allowed to operate in active time for a short period of time to perform a sensing operation/transmission operation, even during a sleep period.

Further, for example, whether (some of) the proposed schemes/rules of this disclosure apply and/or the related parameters (e.g., thresholds) may be configured specifically (or differently or independently) depending on the resource pool, congestion level, service priority (and/or type), QoS requirements (e.g., latency, reliability) or PQI, traffic type (e.g., (aperiodic) generation), SL transport resource allocation mode (Mode 1, Mode 2), a Tx profile (e.g., a TX profile that indicates that it is a service supporting an SL DRX operation, a TX profile that indicates that it is a service where no SL DRX operation is needed to be supported), etc.

For example, whether to apply the proposals of the present disclosure (and/or related parameter configuration value) may be configured specifically (and/or, independently and/or differently) for at least one of whether Uu BWP is enabled or disabled, a resource pool (e.g., a resource pool where a PSFCH is configured, a resource pool where a PSFCH is not configured), service/packet type (and/or priority), QoS profile or QoS requirement (e.g., URLLC/EMBB traffic, reliability, latency), PQI, PFI, cast type (e.g., unicast, groupcast, broadcast), (resource pool) congestion level (e.g., CBR), SL HARQ feedback mode (e.g., NACK only feedback, ACK/NACK feedback), a HARQ feedback enabled MAC PDU (and/or a HARQ feedback disabled MAC PDU) transmission case, whether PUCCH based SL HARQ feedback reporting operation is configured, a case where pre-emption (and/or re-evaluation) (or, -based resource reselection) is (not) performed, (L2 or L1) (source and/or destination) ID, (L2 or L1) (a combination of a source layer ID and a destination layer ID) identifier, (L2 or L1) (a combination of a pair of a source layer ID and an destination layer ID, and a cast type) identifier, a direction of a pair of a source layer ID and a destination layer ID, PC5 RRC connection/link, a case where an SL DRX is (not) performed (or, supported), SL mode type (resource allocation mode 1, resource allocation mode 2), a case where (a)periodic resource reservation is performed, a TX profile that indicates that it is a service where no SL DRX operation is needed to be supported).

For example, the term specific time as used in the present disclosure may refer to a predefined amount of time for a UE to receive sidelink signaling or sidelink data from another UE, or a period of time, or a specific timer (SL DRX retransmission timer, SL DRX inactivity timer, or a timer to ensure a receiving UE to operate as an active time in DRX operation) time, during which a UE is active.

Further, for example, whether the proposals and proposed rules in this disclosure apply (and/or the associated parameter configuration values) may also apply to mmWave SL operation.

According to the prior art, since there is no destination L2 ID for identifying a transmission of IUC information, a receiving UE does not know whether the MAC PDU it receives is a MAC PDU for a transmission of IUC information. According to an embodiment of the present disclosure, a receiving UE may identify that a MAC PDU received by it includes an IUC MAC CE including IUC information, so that the receiving UE may perform resource selection based on the IUC information. As a result, SL communication between a transmitting UE and the receiving UE may be performed smoothly.

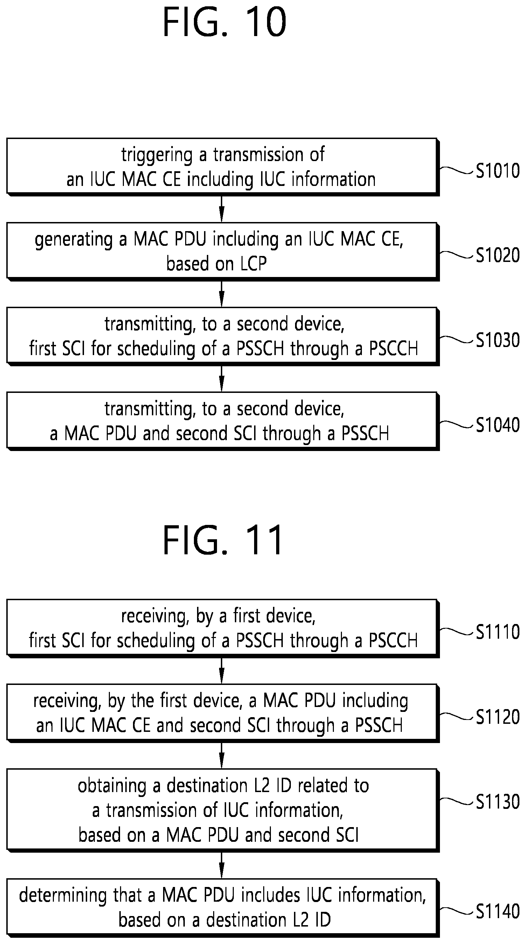

FIG. 10 shows a procedure for a first device to perform wireless communication, according to one embodiment of the present disclosure. The embodiment of FIG. 10 may be combined with various embodiments of the present disclosure.

Referring to FIG. 10, in step S1010, a first device may trigger a transmission of an inter user equipment, UE, coordination, IUC, medium access control, MAC, control element, CE, including IUC information. In step S1020, the first device may generate a MAC protocol data unit, PDU, including the IUC MAC CE, based on logical channel prioritization, LCP. In step S1030, the first device may transmit, to a second device, first sidelink control information, SCI, for scheduling of a physical sidelink shared channel, PSSCH, through a physical sidelink control channel, PSCCH. In step S1040, the first device may transmit, to the second device, the MAC PDU and second SCI through the PSSCH. For example, a destination layer, L, 2 ID related to a transmission of IUC information, which is obtained based on the MAC PDU and the second SCI, may be an identifier for identifying a transmission of IUC information.

For example, the destination L2 ID may be obtained based on a destination L1 ID included in the second SCI and a partial destination L2 ID included in the MAC PDU.

For example, the destination L2 ID may be a full destination L2 ID, and the full destination L2 ID may be a combination of the destination L1 ID and the partial destination L2 ID.

For example, the partial destination L2 ID may be included in a MAC header in the MAC PDU.

For example, additionally, the first device may divide the destination L2 ID into a destination L1 ID and a partial destination L2 ID; include the destination L1 ID in the second SCI; and include the partial destination L2 ID in a MAC header in the MAC PDU.

For example, only a MAC CE related to a transmission of an IUC MAC CE may be included in the MAC PDU, in the LCP.

For example, the IUC MAC CE may be included in the MAC PDU, based on the destination L2 ID, in the LCP.

For example, additionally, the first device may obtain a sidelink, SL, discontinuous reception, DRX, configuration. For example, the IUC MAC CE may include information related to an active time of the SL DRX configuration.

For example, the destination L2 ID may be a unicast destination L2 ID for a transmission of an IUC MAC CE.

For example, the destination L2 ID may be a groupcast destination L2 ID for a transmission of an IUC MAC CE.

For example, the destination L2 ID may be a broadcast destination L2 ID for a transmission of an IUC MAC CE.

For example, the first SCI or the second SCI may include a field related to a transmission of an IUC MAC CE, and the field related to a transmission of an IUC MAC CE may represent the IUC MAC CE being included in the MAC PDU.

For example, the MAC PDU may be determined to include an IUC MAC CE by the second device, based on the field related to a transmission of an IUC MAC CE.

The embodiments described above may be applied to various devices described below. First, a processor 102 of a first device 100 may trigger a transmission of an inter user equipment, UE, coordination, IUC, medium access control, MAC, control element, CE, including IUC information. And, the processor 102 of the first device 100 may generate a MAC protocol data unit, PDU, including the IUC MAC CE, based on logical channel prioritization, LCP. And, the processor 102 of the first device 100 may control a transceiver 106 to transmit, to a second device 200, first sidelink control information, SCI, for scheduling of a physical sidelink shared channel, PSSCH, through a physical sidelink control channel, PSCCH. And, the processor 102 of the first device 100 may control the transceiver 106 to transmit, to the second device 200, the MAC PDU and second SCI through the PSSCH. For example, a destination layer, L, 2 ID related to a transmission of IUC information, which is obtained based on the MAC PDU and the second SCI, may be an identifier for identifying a transmission of IUC information.

According to an embodiment of the present disclosure, a first device for performing wireless communication may be proposed. For example, the first device may comprise: at least one transceiver; at least one processor; and at least one memory operably connectable to the at least one processor and storing instructions. For example, the instructions, based on being executed by the at least one processor, may cause the first device to perform operations, wherein the operations comprise: triggering a transmission of an inter user equipment, UE, coordination, IUC, medium access control, MAC, control element, CE, including IUC information; generating a MAC protocol data unit, PDU, including the IUC MAC CE, based on logical channel prioritization, LCP; transmitting, to a second device, first sidelink control information, SCI, for scheduling of a physical sidelink shared channel, PSSCH, through a physical sidelink control channel, PSCCH; and transmitting, to the second device, the MAC PDU and second SCI through the PSSCH, wherein a destination layer, L, 2 ID related to a transmission of IUC information, which is obtained based on the MAC PDU and the second SCI, may be an identifier for identifying a transmission of IUC information.

For example, the destination L2 ID may be obtained based on a destination L1 ID included in the second SCI and a partial destination L2 ID included in the MAC PDU.

For example, the destination L2 ID may be a full destination L2 ID, and the full destination L2 ID may be a combination of the destination L1 ID and the partial destination L2 ID.

For example, the partial destination L2 ID may be included in a MAC header in the MAC PDU.

For example, additionally, the operations may further comprise: dividing the destination L2 ID into a destination L1 ID and a partial destination L2 ID; including the destination L1 ID in the second SCI; and including the partial destination L2 ID in a MAC header in the MAC PDU.

For example, only a MAC CE related to a transmission of an IUC MAC CE may be included in the MAC PDU, in the LCP.

For example, the IUC MAC CE may be included in the MAC PDU, based on the destination L2 ID, in the LCP.

For example, additionally, the operations may further comprise: obtaining a sidelink, SL, discontinuous reception, DRX, configuration. For example, the IUC MAC CE may include information related to an active time of the SL DRX configuration.

For example, the destination L2 ID may be a unicast destination L2 ID for a transmission of an IUC MAC CE.

For example, the destination L2 ID may be a groupcast destination L2 ID for a transmission of an IUC MAC CE.

For example, the destination L2 ID may be a broadcast destination L2 ID for a transmission of an IUC MAC CE.

For example, the first SCI or the second SCI may include a field related to a transmission of an IUC MAC CE, and the field related to a transmission of an IUC MAC CE may represent the IUC MAC CE being included in the MAC PDU.

For example, the MAC PDU may be determined to include an IUC MAC CE by the second device, based on the field related to a transmission of an IUC MAC CE.

According to an embodiment of the present disclosure, a device adapted to control a first user equipment, UE, may be proposed. For example, the device may comprise: at least one processor; and at least one memory operably connectable to the at least one processor and storing instructions. For example, the instructions, based on being executed by the at least one processor, may cause the first UE to perform operations, wherein the operations comprise: triggering a transmission of an inter user equipment, UE, coordination, IUC, medium access control, MAC, control element, CE, including IUC information; generating a MAC protocol data unit, PDU, including the IUC MAC CE, based on logical channel prioritization, LCP; transmitting, to a second UE, first sidelink control information, SCI, for scheduling of a physical sidelink shared channel, PSSCH, through a physical sidelink control channel, PSCCH; and transmitting, to the second UE, the MAC PDU and second SCI through the PSSCH, wherein a destination layer, L, 2 ID related to a transmission of IUC information, which is obtained based on the MAC PDU and the second SCI, may be an identifier for identifying a transmission of IUC information.

According to an embodiment of the present disclosure, a non-transitory computer-readable storage medium storing instructions may be proposed. For example, the instructions, based on being executed, may cause a first device to: trigger a transmission of an inter user equipment, UE, coordination, IUC, medium access control, MAC, control element, CE, including IUC information; generate a MAC protocol data unit, PDU, including the IUC MAC CE, based on logical channel prioritization, LCP; transmit, to a second device, first sidelink control information, SCI, for scheduling of a physical sidelink shared channel, PSSCH, through a physical sidelink control channel, PSCCH; and transmit, to the second device, the MAC PDU and second SCI through the PSSCH, wherein a destination layer, L, 2 ID related to a transmission of IUC information, which is obtained based on the MAC PDU and the second SCI, may be an identifier for identifying a transmission of IUC information.

FIG. 11 shows a procedure for a second device to perform wireless communication, according to one embodiment of the present disclosure. The embodiment of FIG. 11 may be combined with various embodiments of the present disclosure.

Referring to FIG. 11, in step S1110, a second device may receive, by a first device, first sidelink control information, SCI, for scheduling of a physical sidelink shared channel, PSSCH, through a physical sidelink control channel, PSCCH. In step S1120, the second device may receive, by the first device, a medium access control, MAC, protocol data unit, PDU including inter user equipment, UE, coordination, IUC, MAC control element, CE, and second SCI through the PSSCH. In step S1130, the second device may obtain a destination layer, L, 2 ID related to a transmission of IUC information, based on the MAC PDU and the second SCI. In step S1140, the second device may determine that the MAC PDU includes IUC information, based on the destination L2 ID. For example, the MAC PDU may include the IUC MAC CE, based on logical channel prioritization, LCP.

For example, the IUC MAC CE included in the MAC PDU, may be included in the MAC PDU based on the IUC MAC CE being related to the destination L2 ID.

The embodiments described above may be applied to various devices described below. First, a processor 202 of a second device 200 may control a transceiver 206 to receive, by a first device 100, first sidelink control information, SCI, for scheduling of a physical sidelink shared channel, PSSCH, through a physical sidelink control channel, PSCCH. And, the processor 202 of the second device 200 may control a transceiver 206 to receive, by the first device 100, a medium access control, MAC, protocol data unit, PDU including inter user equipment, UE, coordination, IUC, MAC control element, CE, and second SCI through the PSSCH. And, the processor 202 of the second device 200 may obtain a destination layer, L, 2 ID related to a transmission of IUC information, based on the MAC PDU and the second SCI. And, the processor 202 of the second device 200 may determine that the MAC PDU includes IUC information, based on the destination L2 ID. For example, the MAC PDU may include the IUC MAC CE, based on logical channel prioritization, LCP.

According to an embodiment of the present disclosure, a second device for performing wireless communication may be proposed. For example, the second device may comprise: at least one transceiver; at least one processor; and at least one memory operably connectable to the at least one processor and storing instructions. For example, the instructions, based on being executed by the at least one processor, may cause the second device to perform operations, wherein the operations comprise: receiving, by a first device, first sidelink control information, SCI, for scheduling of a physical sidelink shared channel, PSSCH, through a physical sidelink control channel, PSCCH; receiving, by the first device, a medium access control, MAC, protocol data unit, PDU including inter user equipment, UE, coordination, IUC, MAC control element, CE, and second SCI through the PSSCH; obtaining a destination layer, L, 2 ID related to a transmission of IUC information, based on the MAC PDU and the second SCI; and determining that the MAC PDU includes IUC information, based on the destination L2 ID, wherein the MAC PDU may include the IUC MAC CE, based on logical channel prioritization, LCP.

For example, the IUC MAC CE included in the MAC PDU, may be included in the MAC PDU based on the IUC MAC CE being related to the destination L2 ID.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

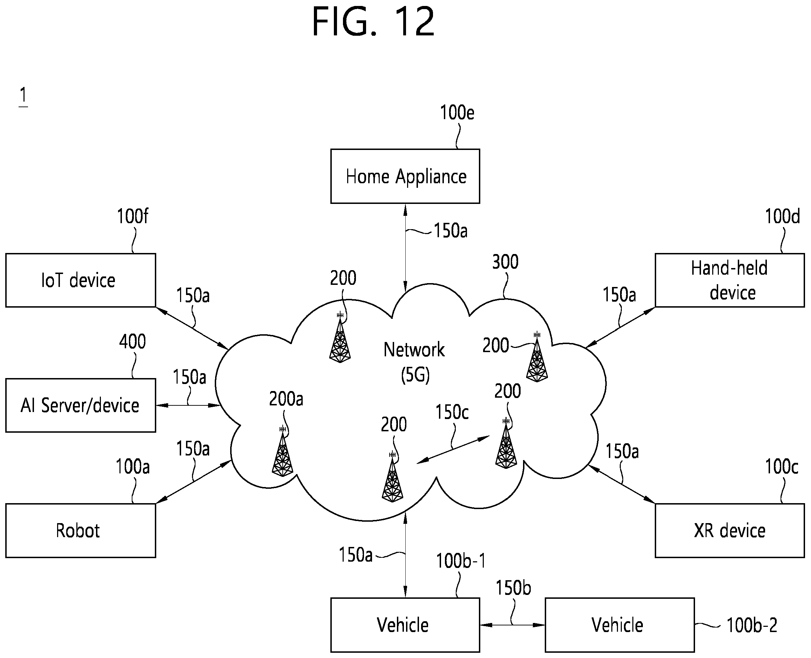

FIG. 12 shows a communication system 1, based on an embodiment of the present disclosure. The embodiment of FIG. 12 may be combined with various embodiments of the present disclosure.

Referring to FIG. 12, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, the wireless communication technologies implemented in the wireless devices 100a-100f of the present disclosure may include LTE, NR, and 6G, as well as Narrowband Internet of Things for low power communication. In this case, for example, NB-IoT technology may be an example of Low Power Wide Area Network (LPWAN) technology, and may be implemented in specifications such as LTE Cat NB1 and/or LTE Cat NB2, and is not limited to the above names. Additionally or alternatively, the wireless communication technology implemented in the wireless devices 100a-100f of this specification may perform communication based on LTE-M technology. In one example, LTE-M technology may be an example of LPWAN technology and may be referred to by various names, such as enhanced Machine Type Communication (eMTC). For example, LTE-M technology may be implemented as at least one of various specifications, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above names. Additionally or alternatively, the wireless communication technology implemented in the wireless devices 100a-100f of this disclosure may include at least one of ZigBee, Bluetooth, and Low Power Wide Area Network (LPWAN), with consideration for low power communication, and is not limited to the above names. For example, ZigBee technology can create personal area networks (PANs) for small, low-power digital communications based on various specifications, such as IEEE 802.15.4, and may be referred to by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

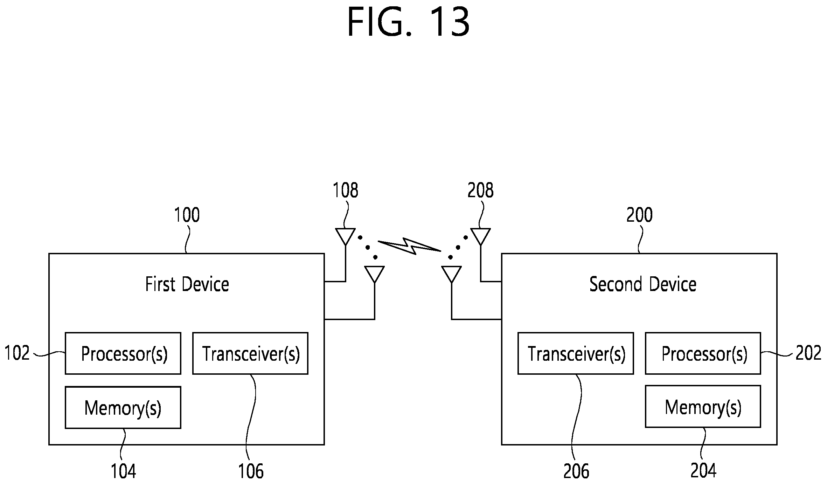

FIG. 13 shows wireless devices, based on an embodiment of the present disclosure. The embodiment of FIG. 13 may be combined with various embodiments of the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

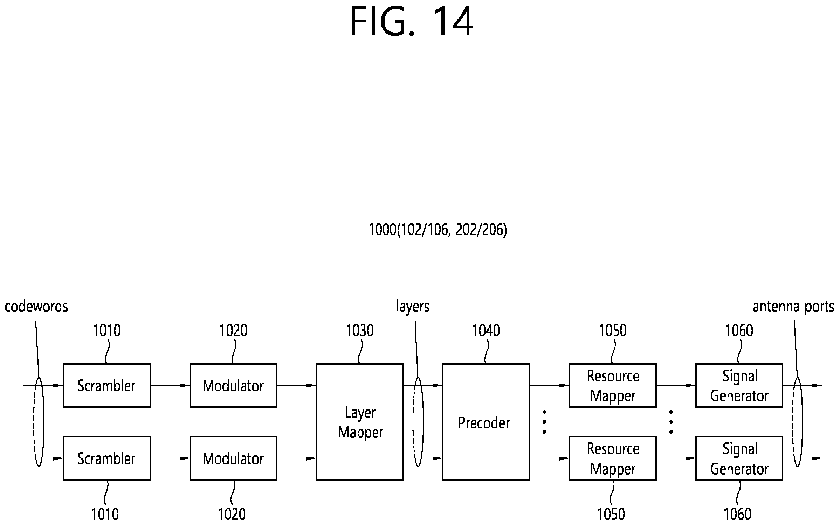

FIG. 14 shows a signal process circuit for a transmission signal, based on an embodiment of the present disclosure. The embodiment of FIG. 14 may be combined with various embodiments of the present disclosure.

Referring to FIG. 14, a signal processing circuit 1000 may include scramblers 1010, modulators 1020, a layer mapper 1030, a precoder 1040, resource mappers 1050, and signal generators 1060. An operation/function of FIG. 14 may be performed, without being limited to, the processors 102 and 202 and/or the transceivers 106 and 206 of FIG. 13. Hardware elements of FIG. 14 may be implemented by the processors 102 and 202 and/or the transceivers 106 and 206 of FIG. 13. For example, blocks 1010 to 1060 may be implemented by the processors 102 and 202 of FIG. 13. Alternatively, the blocks 1010 to 1050 may be implemented by the processors 102 and 202 of FIG. 13 and the block 1060 may be implemented by the transceivers 106 and 206 of FIG. 13.

Codewords may be converted into radio signals via the signal processing circuit 1000 of FIG. 14. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 14. For example, the wireless devices (e.g., 100 and 200 of FIG. 13) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

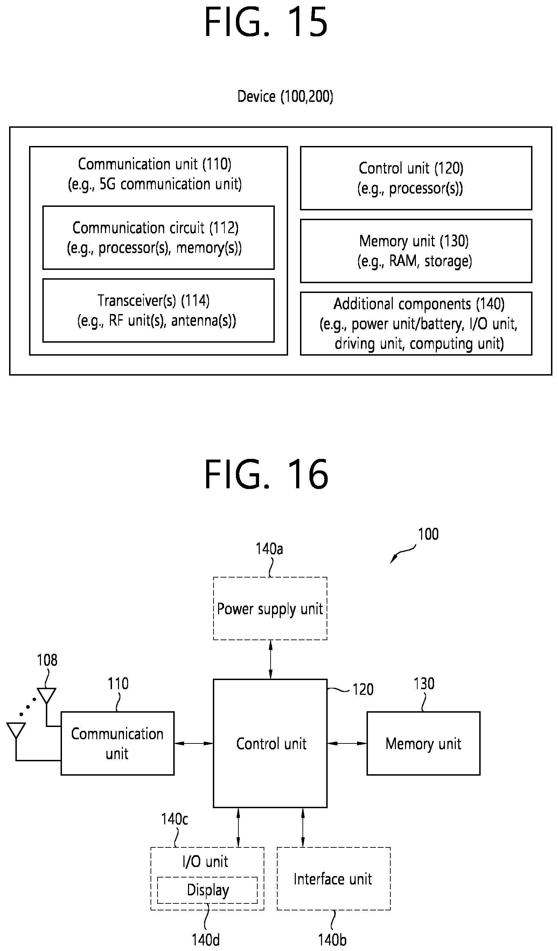

FIG. 15 shows another example of a wireless device, based on an embodiment of the present disclosure. The wireless device may be implemented in various forms according to a use-case/service (refer to FIG. 12). The embodiment of FIG. 15 may be combined with various embodiments of the present disclosure.

Referring to FIG. 15, wireless devices 100 and 200 may correspond to the wireless devices 100 and 200 of FIG. 13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast terminal, a hologram device, a public safety device, an MTC device, a medicine device, a fintech device (or a finance device), a security device, a climate/environment device, the AI server/device (400 of FIG. 12), the BSs (200 of FIG. 12), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 15 will be described in detail with reference to the drawings.

FIG. 16 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 16 may be combined with various embodiments of the present disclosure.

Referring to FIG. 16, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 15, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

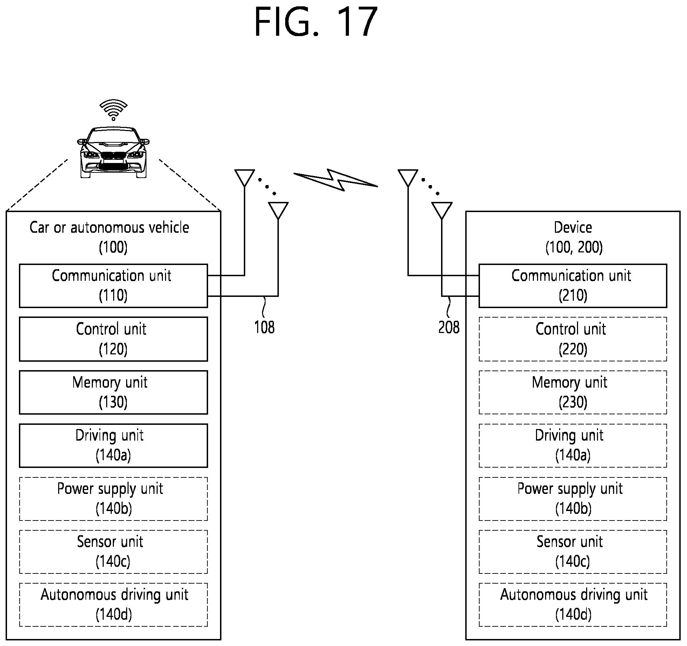

FIG. 17 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 17 may be combined with various embodiments of the present disclosure.

Referring to FIG. 17, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 15, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

## Claims

1. A method for performing, by a first device, wireless communication the method comprising:
triggering (S1010) a transmission of an inter user equipment, UE, coordination, IUC, medium access control, MAC, control element, CE, including IUC information;
generating (S1020) a MAC protocol data unit, PDU, including the IUC MAC CE, based on logical channel prioritization, LCP;
transmitting (S1030), to a second device, first sidelink control information, SCI, for scheduling of a physical sidelink shared channel, PSSCH, through a physical sidelink control channel, PSCCH; and
transmitting (S1040), to the second device, the MAC PDU and second SCI through the PSSCH,
**characterized by** a destination layer, L, 2 ID related to a transmission of IUC information, which is obtained based on the MAC PDU and the second SCI, being an identifier for identifying a transmission of IUC information.

2. The method of claim 1, wherein the destination L2 ID is obtained based on a destination L1 ID included in the second SCI and a partial destination L2 ID included in the MAC PDU.

3. The method of claim 2, wherein the destination L2 ID is a full destination L2 ID, and
wherein the full destination L2 ID is a combination of the destination L1 ID and the partial destination L2 ID.

4. The method of claim 3, wherein the partial destination L2 ID is included in a MAC header in the MAC PDU.

5. The method of claim 1, further comprising:
dividing the destination L2 ID into a destination L1 ID and a partial destination L2 ID;
including the destination L1 ID in the second SCI; and
including the partial destination L2 ID in a MAC header in the MAC PDU.

6. The method of claim 1, wherein only a MAC CE related to a transmission of an IUC MAC CE is included in the MAC PDU, in the LCP.

7. The method of claim 6, wherein the IUC MAC CE is included in the MAC PDU, based on the destination L2 ID, in the LCP.

8. The method of claim 1, further comprising:
obtaining a sidelink, SL, discontinuous reception, DRX, configuration,
wherein the IUC MAC CE includes information related to an active time of the SL DRX configuration.

9. The method of claim 1, wherein the destination L2 ID is a unicast destination L2 ID for a transmission of an IUC MAC CE.

10. The method of claim 1, wherein the destination L2 ID is a groupcast destination L2 ID for a transmission of an IUC MAC CE.

11. The method of claim 1, wherein the destination L2 ID is a broadcast destination L2 ID for a transmission of an IUC MAC CE.

12. The method of claim 1, wherein the first SCI or the second SCI includes a field related to a transmission of an IUC MAC CE, and
wherein the field related to a transmission of an IUC MAC CE represents the IUC MAC CE being included in the MAC PDU.

13. The method of claim 12, wherein the MAC PDU is determined to include an IUC MAC CE by the second device, based on the field related to a transmission of an IUC MAC CE.

14. A first device (100) for performing wireless communication, the first device (100) comprising:
at least one transceiver (106);
at least one processor (102); and
at least one memory (104) operably connectable to the at least one processor (102) and storing instructions that, based on being executed by the at least one processor (102), cause the first device to perform operations,
wherein the operations comprise:
triggering a transmission of an inter user equipment, UE, coordination, IUC, medium access control, MAC, control element, CE, including IUC information;
generating a MAC protocol data unit, PDU, including the IUC MAC CE, based on logical channel prioritization, LCP;
transmitting, to a second device, first sidelink control information, SCI, for scheduling of a physical sidelink shared channel, PSSCH, through a physical sidelink control channel, PSCCH; and
transmitting, to the second device, the MAC PDU and second SCI through the PSSCH,
**characterized by** a destination layer, L, 2 ID related to a transmission of IUC information, which is obtained based on the MAC PDU and the second SCI, being an identifier for identifying a transmission of IUC information.

15. The first device (100) of claim 14, wherein the operations further comprise operations defined in any of claims 2 to 13.

## Patentansprüche

1. Verfahren zum Durchführen einer drahtlosen Kommunikation durch eine erste Vorrichtung, wobei das Verfahren umfasst:
Auslösen (S1010) einer Übertragung eines Inter-Benutzergerät-, UE-, Koordinations-, IUC-, Medienzugriffssteuerungs-, MAC-, Steuerelements, CE, das IUC-Informationen enthält;
Erzeugen (S1020) einer MAC-Protokolldateneinheit, PDU, die das IUC-MAC-CE enthält, basierend auf einer Priorisierung logischer Kanäle, LCP;
Übertragen (S1030) einer ersten Sidelink-Steuerinformation, SCI, zum Planen eines physikalischen gemeinsam genutzten Sidelink-Kanals, PSSCH, über einen physikalischen Sidelink-Steuerkanal, PSCCH, an eine zweite Vorrichtung; und
Übertragen (S1040) der MAC-PDU und einer zweiten SCI über den PSSCH an die zweite Vorrichtung,
**dadurch gekennzeichnet, dass**
eine Ziel-Schicht-2-, L2-, ID, die sich auf eine Übertragung von IUC-Informationen bezieht und basierend auf der MAC-PDU und der zweiten SCI erhalten wird, eine Kennung zum Identifizieren einer Übertragung von IUC-Informationen ist.

2. Verfahren nach Anspruch 1, wobei die Ziel-L2-ID basierend auf einer in der zweiten SCI enthaltenen Ziel-L1-ID und einer in der MAC-PDU enthaltenen partiellen Ziel-L2-ID erhalten wird.

3. Verfahren nach Anspruch 2, wobei die Ziel-L2-ID eine vollständige Ziel-L2-ID ist, und
wobei die vollständige Ziel-L2-ID eine Kombination aus der Ziel-L1-ID und der partiellen Ziel-L2-ID ist.

4. Verfahren nach Anspruch 3, wobei die partielle Ziel-L2-ID in einem MAC-Header in der MAC-PDU enthalten ist.

5. Verfahren nach Anspruch 1, ferner umfassend:
Aufteilen der Ziel-L2-ID in eine Ziel-L1-ID und eine partielle Ziel-L2-ID;
Aufnehmen der Ziel-L1-ID in die zweite SCI; und
Aufnehmen der partiellen Ziel-L2-ID in einen MAC-Header in der MAC-PDU.

6. Verfahren nach Anspruch 1, wobei bei der LCP nur ein MAC-CE, das sich auf eine Übertragung eines IUC-MAC-CE bezieht, in der MAC-PDU enthalten ist.

7. Verfahren nach Anspruch 6, wobei bei der LCP das IUC-MAC-CE basierend auf der Ziel-L2-ID in der MAC-PDU enthalten ist.

8. Verfahren nach Anspruch 1, ferner umfassend:
Erhalten einer Sidelink-, SL-, Konfiguration für diskontinuierlichen Empfang, DRX,
wobei das IUC-MAC-CE Informationen enthält, die sich auf eine aktive Zeit der SL-DRX-Konfiguration beziehen.

9. Verfahren nach Anspruch 1, wobei die Ziel-L2-ID eine Unicast-Ziel-L2-ID für eine Übertragung eines IUC-MAC-CE ist.

10. Verfahren nach Anspruch 1, wobei die Ziel-L2-ID eine Groupcast-Ziel-L2-ID für eine Übertragung eines IUC-MAC-CE ist.

11. Verfahren nach Anspruch 1, wobei die Ziel-L2-ID eine Broadcast-Ziel-L2-ID für eine Übertragung eines IUC-MAC-CE ist.

12. Verfahren nach Anspruch 1, wobei die erste SCI oder die zweite SCI ein Feld enthält, das sich auf eine Übertragung eines IUC-MAC-CE bezieht, und
wobei das Feld, das sich auf eine Übertragung eines IUC-MAC-CE bezieht, angibt, dass das IUC-MAC-CE in der MAC-PDU enthalten ist.

13. Verfahren nach Anspruch 12, wobei durch die zweite Vorrichtung basierend auf dem Feld, das sich auf eine Übertragung eines IUC-MAC-CE bezieht, bestimmt wird, dass die MAC-PDU ein IUC-MAC-CE enthält.

14. Erste Vorrichtung (100) zum Durchführen einer drahtlosen Kommunikation, wobei die erste Vorrichtung (100) umfasst:
mindestens einen Transceiver (106);
mindestens einen Prozessor (102); und
mindestens einen Speicher (104), der betriebsmäßig mit dem mindestens einen Prozessor (102) verbindbar ist und Anweisungen speichert, die bei Ausführung durch den mindestens einen Prozessor (102) bewirken, dass die erste Vorrichtung Operationen durchführt,
wobei die Operationen umfassen:
Auslösen einer Übertragung eines Inter-Benutzergerät-, UE-, Koordinations-, IUC-, Medienzugriffssteuerungs-, MAC-, Steuerelements, CE, das IUC-Informationen enthält;
Erzeugen einer MAC-Protokolldateneinheit, PDU, die das IUC-MAC-CE enthält, basierend auf einer Priorisierung logischer Kanäle, LCP;
Übertragen einer ersten Sidelink-Steuerinformation, SCI, zum Planen eines physikalischen gemeinsam genutzten Sidelink-Kanals, PSSCH, über einen physikalischen Sidelink-Steuerkanal, PSCCH, an eine zweite Vorrichtung; und
Übertragen der MAC-PDU und einer zweiten SCI über den PSSCH an die zweite Vorrichtung,
**dadurch gekennzeichnet, dass**
eine Ziel-Schicht-2-, L2-, ID, die sich auf eine Übertragung von IUC-Informationen bezieht und basierend auf der MAC-PDU und der zweiten SCI erhalten wird, eine Kennung zum Identifizieren einer Übertragung von IUC-Informationen ist.

15. Erste Vorrichtung (100) nach Anspruch 14, wobei die Operationen ferner in einem der Ansprüche 2 bis 13 definierte Operationen umfassen.

## Revendications

1. Procédé d'établissement de communication sans fil par un premier dispositif, le procédé comprenant:
le déclenchement (S1010) de la transmission d'un élément de commande, CE, de contrôle d'accès au support, MAC, de coordination, IUC, entre équipements utilisateurs y compris des informations IUC;
la génération (S1020) d'une unité de données de protocole MAC, PDU, y compris le IUC MAC CE, sur la base de la hiérarchisation des canaux logiques, LCP;
la transmission (S1030), à un deuxième dispositif, de premières informations de commande de liaison latérale, SCI, pour ordonnancer un canal physique de liaison latérale partagé, PSSCH, par l'intermédiaire d'un canal physique de commande de liaison latérale, PSCCH; et
la transmission (S1040), au deuxième dispositif, la MAC PDU et les deuxièmes SCI par l'intermédiaire du PSSCH,
**caractérisé par** une couche de destination, L, 2 ID associés à une transmission d'informations IUC, obtenu à partir de la MAC PDU et des deuxièmes SCI, et étant un identifiant pour identifier une transmission d'informations IUC.

2. Procédé selon la revendication 1, dans lequel l'ID L2 de destination est obtenu à partir d'un ID L1 de destination inclus dans les deuxièmes SCI et d'un ID L2 de destination partiel inclus dans la MAC PDU.

3. Procédé selon la revendication 2, dans lequel l'ID L2 de destination est un ID L2 de destination complet, et
dans lequel l'ID L2 de destination complet est une combinaison de l'ID L1 de destination et de l'ID L2 de destination partiel.

4. Procédé selon la revendication 3, dans lequel l'ID L2 de destination partiel est inclus dans un en-tête MAC dans la MAC PDU.

5. Procédé selon la revendication 1, comprenant en outre:
la division de l'ID L2 de destination en un ID L1 de destination et un ID L2 de destination partiel;
l'inclusion de l'ID L1 de destination dans les deuxièmes SCI; et
l'inclusion de l'ID L2 partiel de destination dans un en-tête MAC au sein de la MAC PDU.

6. Procédé selon la revendication 1, dans lequel seul un MAC CE lié à la transmission d'un IUC MAC CE est inclus dans la MAC PDU, dans la LCP.

7. Procédé selon la revendication 6, dans lequel l'IUC MAC CE est inclus dans la MAC PDU, en fonction de l'ID L2 de destination, dans la LCP.

8. Procédé selon la revendication 1, comprenant en outre:
l'obtention d'une configuration de réception discontinue, DRX, de liaison latérale, SL,
dans lequel le IUC MAC CE comprend des informations liées à un temps actif de la configuration SL DRX.

9. Procédé selon la revendication 1, dans lequel l'ID L2 de destination est un ID L2 de diffusion individuelle pour une transmission d'un IUC MAC CE.

10. Procédé selon la revendication 1, dans lequel l'ID L2 de destination est un ID L2 de diffusion de groupe pour une transmission d'un IUC MAC CE.

11. Procédé selon la revendication 1, dans lequel l'ID L2 de destination est un ID L2 de diffusion de groupe pour une transmission d'un IUC MAC CE.

12. Procédé selon la revendication 1, dans lequel les premières SCI ou les deuxièmes SCI comprennent un champ associé à une transmission d'un IUC MAC CE, et
dans lequel le champ associé à une transmission d'un IUC MAC CE représente l'IUC MAC CE inclus dans la MAC PDU.

13. Procédé selon la revendication 12, dans lequel la MAC PDU est déterminée pour comprendre un IUC MAC CE par le deuxième dispositif, sur la base du champ associé à une transmission d'un IUC MAC CE.

14. Premier dispositif (100) pour établir la communication sans fil, le premier dispositif (100) comprenant:
au moins un émetteur récepteur (106);
au moins un processeur (102); et
au moins une mémoire (104) pouvant être connectée fonctionnellement à l'au moins un processeur (102) et stockant des instructions qui, lorsqu'elles sont exécutées par l'au moins un processeur (102), amènent le premier dispositif à effectuer les opérations,
dans lequel les opérations comprennent:
le déclenchement d'une transmission d'un élément de commande, CE, de contrôle d'accès au support, MAC, de coordination, IUC, entre équipements utilisateurs y compris des informations IUC;
la génération d'une unité de données de protocole MAC, PDU, y compris le IUC MAC CE, sur la base de la hiérarchisation des canaux logiques, LCP;
la transmission, à un deuxième dispositif, de premières informations de commande de liaison latérale, SCI, pour ordonnancer un canal physique de liaison latérale partagé, PSSCH, par l'intermédiaire d'un canal physique de commande de liaison latérale, PSCCH; et
la transmission, au deuxième dispositif, la MAC PDU et les deuxièmes SCI par l'intermédiaire du PSSCH,
**caractérisé par** une couche de destination, L, 2 ID associés à une transmission d'informations IUC, obtenu à partir de la MAC PDU et des deuxièmes SCI, et étant un identifiant pour identifier une transmission d'informations IUC.

15. Premier dispositif (100) selon la revendication 14, dans lequel les opérations comprennent en outre des opérations définis dans l'une quelconque des revendications 2 à 13.
